# EUROPEAN PATENT APPLICATION

(11) **EP 4 707 470 A1**
(43) Date of publication of application: **11.03.2026**
(21) Application number: 24839524.6
(22) Date of filing: 26.06.2024
(51) Int. Cl.: E02F 9/00, B60K 8/00, B60K 11/06, B60K 15/063, F01P 3/18, F02M 21/02

(54) **WORK MACHINE**

(30) Priority: 07.07.2023 JP 2023112479
(71) Applicant: KOBELCO CONSTRUCTION MACHINERY CO., LTD., Hiroshima-shi, Hiroshima 731-5161 (JP)
(72) Inventor: KAMADA, Masashi, Hiroshima-shi, Hiroshima 731-5161 (JP); HIRAHARA, Atsushi, Hiroshima-shi, Hiroshima 731-5161 (JP); YAMAGUCHI, Takunori, Hiroshima-shi, Hiroshima 731-5161 (JP); OKA, Hidekazu, Hiroshima-shi, Hiroshima 731-5161 (JP); KUGATA, Yuichi, Hiroshima-shi, Hiroshima 731-5161 (JP); YOSHIDA, Michio, Hiroshima-shi, Hiroshima 731-5161 (JP)
(74) Representative: TBK
(86) International application number: PCT/JP2024/023208
(87) International publication number: WO 2025/013631

(57) **Abstract**

A work machine (100) comprises: a hydrogen tank (31) that stores hydrogen; a heat exchanger (33) that exchanges heat with cooling air (CA); an electronic device (34) for operating the work machine (100); and a machine chamber (14). The hydrogen tank (31) is disposed above the electronic device (34) in the machine chamber (14), and is disposed upstream of the heat exchanger (33) in the flow direction of the cooling air (CA).

## Description

### Technical Field

The present disclosure relates to a work machine such as a hydraulic excavator including a hydrogen tank.

### Background Art

Patent Literature 1 discloses a hydrogen tank storage case intended to discharge leaked hydrogen. Patent Literature 2 discloses a fuel cell vehicle intended to improve safety against hydrogen leakage. The techniques of Patent Literature 1 and Patent Literature 2 are both assumed to be employed in automobiles such as trucks. Patent Literature 3 discloses a work machine such as a hydraulic excavator including a fuel cell.

In general, a work machine such as a hydraulic excavator includes a lower travelling body, an upper slewing body swingably supported by the lower travelling body, a work device including a boom swingably supported by the upper slewing body, hydraulic device, and an electronic device for operating the work machine. The hydraulic device includes various devices for a travelling operation of the lower travelling body, a slewing operation of the upper slewing body, and a turning operation of the work device. A cab is disposed at a front portion of the slewing frame of the upper slewing body, a counterweight is disposed at a rear portion of the slewing frame, and a machine chamber is formed between the cab and the counterweight.

As described above, in the work machine, since it is necessary to dispose many machines such as a cab, a counterweight, and a hydraulic device on the slewing frame, the space of the machine chamber inevitably has a limited size. In a case where a hydrogen-related device including a hydrogen tank, a heat exchanger for cooling the device, and an electronic device for operating a work machine are disposed in a machine chamber which is such a limited space, the techniques of Patent Literatures 1 and 2 cannot be adopted as they are as safety measures at the time of hydrogen leakage. In addition, when both the heat exchanger and the hydrogen tank are disposed in the machine chamber, there is also a problem that the temperature around the hydrogen tank is likely to rise. Patent Literature 3 does not disclose any means for solving these problems.

### Citation List

### Patent Literature

Patent Literature 1: JP 2021-187163 A
Patent Literature 2: JP 2022-73237 A
Patent Literature 3: WO 2022/137688 A

### Summary of Invention

An object of the present disclosure is to provide a work machine capable of improving safety at the time of hydrogen leakage and suppressing a temperature rise around a hydrogen tank.

A work machine according to a first aspect includes a hydrogen tank that stores hydrogen, a heat exchanger that exchanges heat with cooling air, an electronic device for operating the work machine, and a machine chamber. The hydrogen tank is disposed above the electronic device in the machine chamber, and is disposed upstream of the heat exchanger in a flow direction of the cooling air.

### Brief Description of Drawings

FIG. 1 is a left side view illustrating a work machine according to an embodiment of the present disclosure.
FIG. 2 is a right side view illustrating the work machine.
FIG. 3 is a perspective view of an upper slewing body of the work machine as viewed from diagonally behind on the left.
FIG. 4 is a plan view illustrating a slewing frame and a cab of the upper slewing body.
FIG. 5 is a diagram illustrating the inside of a machine chamber of the work machine according to a first embodiment of the present disclosure, and is a cross-sectional view taken along line A-A in FIG. 1.
FIG. 6 is a partially broken left side view illustrating the work machine, and is a diagram including a cross section of a wall portion defining the machine chamber taken along line VI-VI in FIG. 5.
FIG. 7 is a cross-sectional view illustrating the inside of the machine chamber.
FIG. 8 is a cross-sectional view illustrating the inside of the machine chamber, and illustrates a state in which a hydrogen filling device is connected to a hydrogen filling port.
FIG. 9 is a side view illustrating an arrangement of an electronic device and a hydrogen-related device disposed on a slewing frame of a work machine according to a second embodiment of the present disclosure.
FIG. 10 is a diagram illustrating the inside of the machine chamber of the work machine according to the second embodiment, and is a cross-sectional view taken along line A-A in FIG. 1.
FIG. 11 is a side view illustrating an arrangement of an electronic device and a hydrogen-related device disposed on a slewing frame of a work machine according to a first modification of the second embodiment.
FIG. 12 is a diagram illustrating the inside of a machine chamber of a work machine according to the first modification of the second embodiment, and is a cross-sectional view taken along line A-A in FIG. 1.
FIG. 13 is a diagram illustrating the inside of a machine chamber of a work machine according to the first modification of the second embodiment, and is a cross-sectional view taken along line B-B in FIG. 1.
FIG. 14 is a diagram illustrating the inside of a machine chamber of a work machine according to a second modification of the second embodiment, and is a cross-sectional view taken along line A-A in FIG. 1.
FIG. 15 is a diagram illustrating the inside of a machine chamber of a work machine according to the second modification of the second embodiment, and is a cross-sectional view taken along line B-B in FIG. 1.
FIG. 16 is a diagram illustrating the inside of a machine chamber of a work machine according to a third embodiment, and is a cross-sectional view taken along line A-A in FIG. 1.
FIG. 17 is a diagram illustrating the inside of a machine chamber of a work machine according to a modification of the third embodiment, and is a cross-sectional view taken along line B-B in FIG. 1.
FIG. 18 is a plan view illustrating the inside of a machine chamber of a work machine according to another modification.
FIG. 19 is a perspective view of the upper slewing body of the work machine according to the modification illustrated in FIG. 18 as viewed from diagonally front right.

### Description of Embodiments

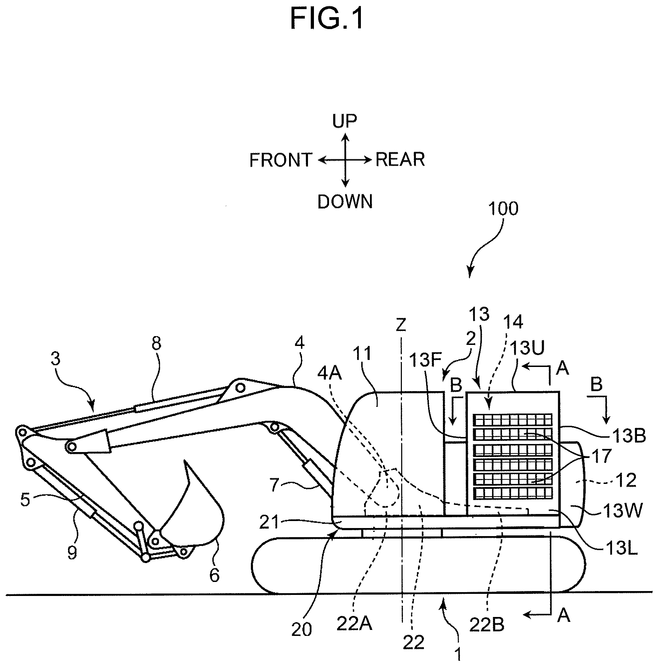

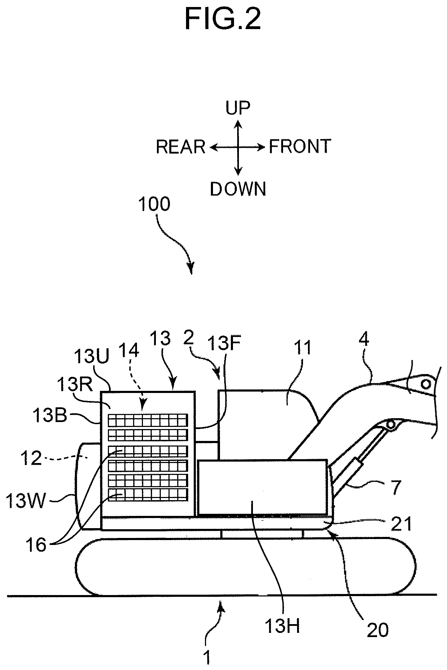

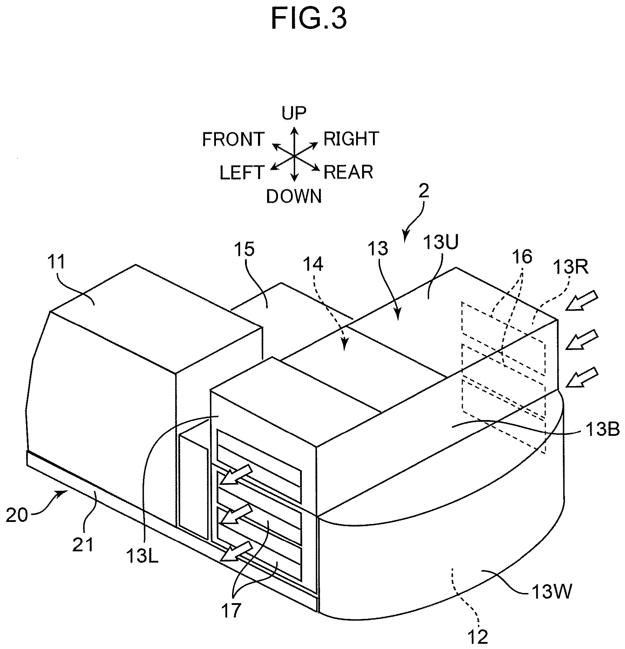

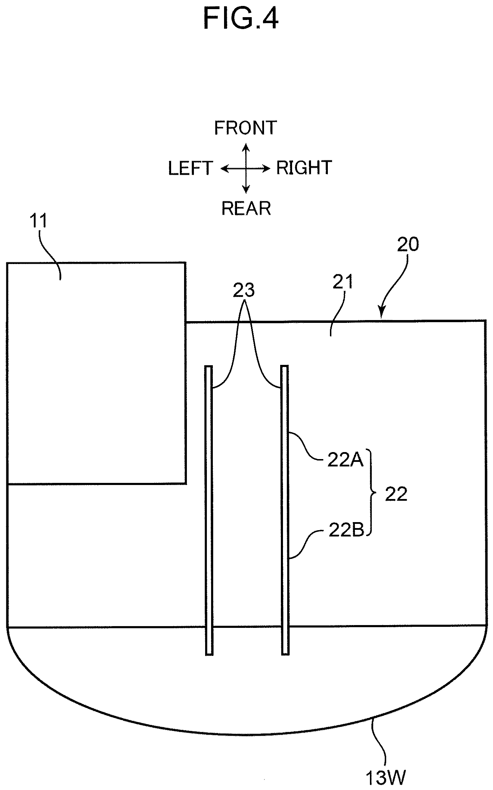

An embodiment of the present disclosure will be described with reference to the drawings. FIG. 1 is a left side view illustrating a work machine 100 according to an embodiment of the present disclosure. FIG. 2 is a right side view illustrating the work machine 100. FIG. 3 is a perspective view of an upper slewing body 2 of the work machine 100 as viewed from diagonally behind on the left. FIG. 4 is a plan view illustrating a slewing frame 20 and a cab 11 of the upper slewing body 2.

The work machine 100 includes a lower travelling body 1 including a travelling device, an upper slewing body 2 supported by the lower travelling body 1 so as to be swingable with respect to the lower travelling body 1 about a slewing axis Z extending vertically, and a work device 3 supported by the upper slewing body 2. Although the work machine 100 according to the present embodiment is a hydraulic excavator, a work machine in the present disclosure is not limited to a hydraulic excavator, and may be another work machine such as a crane or a bulldozer. The travelling device may be, for example, a crawler type travelling device or a travelling device having a tire.

The upper slewing body 2 includes a slewing frame 20, a cab 11 supported by the slewing frame 20, a counterweight 12, and a plurality of covers.

The slewing frame 20 is a member swingably supported on the lower travelling body 1. The slewing frame 20 includes a frame body 21 and a standing body 22. The frame body 21 has an upper surface having a size in which the cab 11 and a wall portion 13 can be disposed. The cab 11 is disposed at the left front portion of the frame body 21, and the counterweight 12 is disposed at the rear portion of the frame body 21 or behind the frame body 21. A driver's seat, an operation lever, an operation pedal, and the like are disposed in the cab 11. A machine chamber 14 is formed behind the cab 11.

In the present embodiment, the machine chamber 14 is formed behind the cab 11 and in front of the counterweight 12, and is defined by the wall portion 13. The wall portion 13 only needs to have a shape capable of defining the machine chamber 14, and a specific shape is not particularly limited. The wall portion 13 may have, for example, a box shape. Note that, in a case where the weight of the device disposed in the machine chamber 14 is large, the counterweight 12 can be omitted.

The standing body 22 supports a boom 4 such that the boom 4 can be raised and lowered. As illustrated in FIG. 1, the standing body 22 has a shape that stands upright from the frame body 21 and extends forward and backward as indicated by a broken line in FIG. 1. The standing body 22 includes a boom attachment portion 22A (front portion) to which a base end portion 4A of the boom 4 indicated by a broken line in FIG. 1 is attached, and a rear portion 22B. The rear portion 22B is located behind the boom attachment portion 22A and is lower in height than the boom attachment portion 22A. In the present embodiment, as illustrated in FIGS. 1 and 4, the standing body 22 includes left and right standing plates 23 and 23 facing each other with an interval therebetween in the left and right directions. Each of the left and right standing plates 23 and 23 is a plate-like member standing upright from the frame body 21, and extends forward and backward from the front end to the rear end. The boom attachment portion 22A includes a right boom attachment portion of the right standing plate 23 and a left boom attachment portion of the left standing plate 23.

At least a portion of the plurality of covers defines the machine chamber 14. The plurality of covers includes a front cover 13F located on the front side of the machine chamber 14, a rear cover 13B located on the rear side of the machine chamber 14, a left cover 13L located on the left side of the machine chamber 14, a right cover 13R located on the right side of the machine chamber 14, and an upper cover 13U located on the upper side of the machine chamber 14. In the present embodiment, the wall portion 13 defining the machine chamber 14 includes the front cover 13F, the rear cover 13B, the left cover 13L, the right cover 13R, and the upper cover 13U.

The plurality of covers further include a weight cover 13W that covers the counterweight 12, and a device cover 13H that defines a device housing chamber 15 in which a device housing space for accommodating various devices is secured. In the present embodiment, the weight cover 13W is located behind the rear cover 13B, and the device cover 13H is disposed at the right front portion of the frame body 21 and is located in front of the front cover 13F. The wall portion 13 may include one or both of the weight cover 13 W and the device cover 13H. The weight cover 13W may constitute the counterweight itself. The device housing space inside the device housing chamber 15 may be a space constituting a part of the machine chamber 14 or may be a space different from the machine chamber 14.

The work device 3 includes a boom 4 attached to the upper slewing body 2 so as to be raised and lowered, an arm 5 swingably attached to the boom 4, and a distal end attachment 6 swingably attached to the arm 5. Although the distal end attachment 6 in the present embodiment is a bucket, the distal end attachment may be, for example, another distal end attachment such as a grapple, a fork, or a crusher.

The hydraulic device includes a hydraulic pump 81, a control valve (not illustrated), and a hydraulic oil tank (not illustrated). A part or all of the hydraulic device may be disposed inside the machine chamber 14 or may be disposed outside the machine chamber 14. A part or all of the hydraulic device may be disposed in a device housing space inside the device housing chamber 15, or may be disposed outside the device housing chamber 15. In the present embodiment, the hydraulic pump 81 is disposed in the machine chamber 14, and the control valve is disposed in the device housing space inside the device housing chamber 15. The hydraulic pump 81 is driven by an electric motor 34A described later to discharge hydraulic oil.

The work machine 100 includes a plurality of actuators. Each of the plurality of actuators operates by receiving supply of hydraulic oil from the hydraulic pump 81. The plurality of actuators include a boom cylinder 7 for raising and lowering the boom 4, an arm cylinder 8 for rotating the arm 5, a distal end attachment cylinder 9 for rotating the distal end attachment 6, a slewing motor (not illustrated) for slewing the upper slewing body 2 with respect to the lower travelling body 1, and a travelling motor (not illustrated) included in the travelling device of the lower travelling body 1.

The control valve is opened and closed such that hydraulic oil from the hydraulic pump 81 is supplied to an actuator corresponding to a lever operation or a pedal operation given to an operation device (not illustrated) by an operator.

### [First Embodiment]

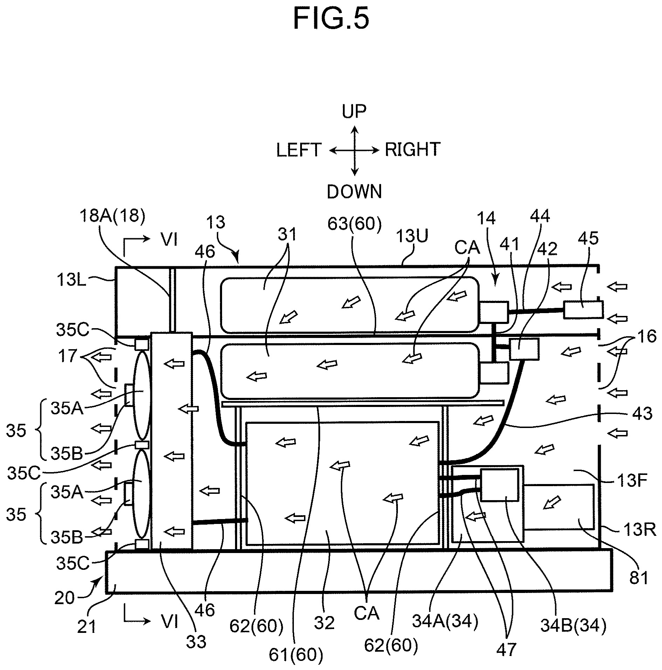

FIG. 5 is a diagram illustrating the inside of the machine chamber 14 of the work machine 100 according to the first embodiment, and is a cross-sectional view taken along line A-A in FIG. 1. FIG. 5 illustrates various devices disposed in the machine chamber 14, and illustrates flows of cooling air CA in the machine chamber 14 by arrows.

The work machine 100 according to the first embodiment includes a hydrogen tank 31 that stores hydrogen, a fuel cell device 32 to which hydrogen (hydrogen gas) is supplied from the hydrogen tank 31, a heat exchanger 33 that exchanges heat with the cooling air CA, an electronic device 34 for operating the work machine 100, and a wall portion 13 that defines the machine chamber 14. In the machine chamber 14, the hydrogen tank 31 is disposed above the electronic device 34, and is disposed upstream of the heat exchanger 33 in the flow direction of the cooling air CA.

The hydrogen tank 31 is a resin tank. Examples of the resin tank include a type-4 resin tank. The type-4 resin tank has a carbon fiber-reinforced plastic wound around the outside of a resin container, and has high strength. However, the hydrogen tank 31 is not limited to the type-4 resin tank, and may be another resin tank or a tank other than the resin tank.

The high-pressure hydrogen gas stored in the hydrogen tank 31 is supplied to a pressure reducing valve 42 through a high-pressure hydrogen pipe 41, and is decompressed in the pressure reducing valve 42. The decompressed hydrogen gas is supplied to the fuel cell device 32 through an intermediate-pressure hydrogen pipe 43.

The fuel cell device 32 is configured to be able to supply electric power to the electric motor 34A. The fuel cell device 32 includes a fuel cell that generates electric power by electrochemically reacting hydrogen supplied from the hydrogen tank 31 with oxygen (for example, oxygen contained in air introduced from an intake port 16). The fuel cell includes, for example, a fuel cell stack including a plurality of cells.

The heat exchanger 33 cools the fuel cell of the fuel cell device 32. In the present embodiment, the heat exchanger 33 is configured to cause heat exchange between the cooling air CA and the cooling water circulating between the fuel cell device 32 and the heat exchanger 33. The heat exchanger 33 may be, for example, a radiator or another type of heat exchanger.

The electronic device 34 includes an electric motor 34A and an inverter 34B. The electronic device 34 may further include at least one of a converter, a battery, a compressor, a water pump, and a heater (not illustrated). The battery may be charged by electric power generated by the fuel cell device 32. In the present embodiment, the electric motor 34A and the inverter 34B are disposed upstream of the fuel cell device 32 in the flow direction of the cooling air CA. However, at least one of the electric motor 34A and the inverter 34B may be disposed downstream of the fuel cell device 32 in the flow direction of the cooling air CA, and specifically, may be disposed in a region between the fuel cell device 32 and the heat exchanger 33.

The electric motor 34A is a drive source that drives the hydraulic pump 81. The electric motor 34A operates by receiving power supplied from the fuel cell device 32. The electric motor 34A is configured by, for example, a three-phase motor. The electric motor 34A may operate by receiving power output from a battery.

The inverter 34B is connected to the fuel cell device 32 via a high-voltage wiring 47. The inverter 34B is interposed between the fuel cell device 32 and the electric motor 34A, converts a direct current supplied from at least one of the fuel cell device 32 and the battery into a three-phase alternating current, and supplies the three-phase alternating current to the electric motor 34A. The inverter 34B adjusts the rotation speed of the electric motor 34A.

The converter steps down a high voltage output from the fuel cell device 32 or the battery and supplies the stepped-down high voltage to a fan motor 35B of a cooling fan 35 described later. The compressor is, for example, a device that compresses a vaporized refrigerant, and is included in an air conditioner for adjusting a temperature in the cab 11. The water pump circulates cooling water between the fuel cell device 32 and the heat exchanger 33 through a water pipe 46. The heater may include at least one of an electric heater constituting a heating device for heating the inside of the cab 11, an electric heater for preheating the battery, and an electric heater for preheating the hydraulic oil.

In the work machine 100, even if hydrogen gas leaks from the hydrogen tank 31 or the vicinity thereof (for example, a hydrogen filling port to be described later), since the hydrogen gas has a specific gravity based on air of less than 1 (that is, lighter than air), the hydrogen gas moves upward from the hydrogen tank 31 or the vicinity thereof in the machine chamber 14, it is suppressed that the hydrogen gas reaches the electronic device 34 disposed below the hydrogen tank 31. This improves safety at the time of hydrogen leakage. In the machine chamber 14, cooling air CA before passing through heat exchanger 33, that is, cooling air CA before a temperature rises due to heat exchange in heat exchanger 33 is supplied to hydrogen tank 31 disposed upstream of the heat exchanger 33. The temperature around the hydrogen tank 31 can rise due to heat generated by the operation of devices disposed inside the machine chamber 14 such as the fuel cell device 32, the electronic device 34, and the hydraulic pump 81. However, in the present embodiment, since the cooling air CA before passing through the heat exchanger 33 is also supplied to the surroundings of these devices, the temperature rise around the hydrogen tank 31 is more effectively suppressed. When the hydrogen tank 31 is filled with hydrogen, the temperature of the hydrogen tank increases as the pressure of the hydrogen gas in the hydrogen tank 31 increases, but since the cooling air CA is supplied to the periphery of the hydrogen tank 31, the temperature increase in the periphery of the hydrogen tank 31 is suppressed. The filling with hydrogen will be described later. The suppression of the temperature rise around the hydrogen tank 31 also contributes to the suppression of the deterioration of the resin tank. When hydrogen is supplied from the hydrogen tank 31 to the fuel cell device 32, the temperature of the hydrogen tank 31 decreases with the pressure reduction of the hydrogen gas in the hydrogen tank 31, and the temperature of the cooling air CA passing through the periphery of the hydrogen tank 31 decreases. Therefore, in the present embodiment, the cooling air CA having passed through the periphery of the hydrogen tank 31 and lowered in temperature is supplied to the heat exchanger 33 disposed downstream of the hydrogen tank 31 in the machine chamber 14, so that heat exchange efficiency (cooling efficiency) in the heat exchanger 33 can be improved.

The wall portion 13 includes an intake port 16 and an exhaust port 17. The intake port 16 is an opening through which air outside the machine chamber 14 is taken into the machine chamber 14 as cooling air CA. The exhaust port 17 is an opening for discharging cooling air CA inside machine chamber 14 to the outside of the machine chamber 14. In the present embodiment, the intake port 16 is formed in the right cover 13R of the wall portion 13, and the exhaust port 17 is formed in the left cover 13L of the wall portion 13. However, in the wall portion 13, a portion where the intake port 16 is formed is not limited to the right cover 13R, and a portion where the exhaust port 17 is formed is not limited to the left cover 13L. Specifically, for example, the intake port 16 may be formed in the left cover 13L, may be formed in the front cover 13F, may be formed in the rear cover 13B, or may be formed in the upper cover 13U. The exhaust port 17 may be formed in the right cover 13R, the front cover 13F, the rear cover 13B, or the upper cover 13U. It is preferable that the intake port 16 and the exhaust port 17 are formed in portions facing each other in the horizontal direction in the wall portion 13.

The work machine 100 includes a cooling fan 35 that forms a flow of the cooling air CA. The cooling fan 35 can effectively form a flow of the cooling air CA from the intake port 16 to the exhaust port 17 in the machine chamber 14. In the present embodiment, the cooling air CA flows from right to left as indicated by arrows in FIG. 5 in the machine chamber 14. The cooling fan 35 includes an impeller 35A including a plurality of blades disposed along an outer periphery of a rotary shaft, a fan motor 35B that drives the impeller 35A, and a shroud 35C disposed so as to surround an outer periphery of the impeller 35A. The shroud 35C is disposed with a gap in the radial direction with respect to the impeller 35A. The cooling fan 35 operates, for example, when electric power is supplied from the fuel cell device 32 or the battery.

In the present embodiment, the cooling fan 35 is disposed between the exhaust port 17 and the heat exchanger 33. Specifically, the cooling fan 35 is disposed between the exhaust port 17 and the heat exchanger 33 and adjacent to the exhaust port 17.

As illustrated in FIG. 5, a part of the intake port 16 is formed at a height position aligned in the horizontal direction with respect to the hydrogen tank 31. In this case, even if hydrogen gas leaks from the hydrogen tank 31 or the vicinity thereof (for example, a hydrogen filling port) when the cooling fan 35 is not operating, the hydrogen gas is easily discharged to the outside of the machine chamber 14 through the intake port 16 formed at the same height position as the hydrogen tank 31. This further improves safety at the time of hydrogen leakage. A part of the intake port 16 may be formed at a position above the hydrogen tank 31.

A part of the exhaust port 17 is formed at a height position aligned in the horizontal direction with respect to the hydrogen tank 31. In this case, even if hydrogen gas leaks from the hydrogen tank 31 or the vicinity thereof (for example, a hydrogen filling port), the hydrogen gas is easily discharged to the outside of the machine chamber 14 through the exhaust port 17 formed at the same height position as the hydrogen tank 31 regardless of the presence or absence of the operation of the cooling fan 35. This further improves safety at the time of hydrogen leakage. A part of the exhaust port 17 may be formed at a position above the hydrogen tank 31.

In the present embodiment, a part (upper part) of the intake port 16 is formed at a height position aligned in the horizontal direction with respect to the hydrogen tank 31, and the other part (lower part) of the intake port 16 is formed at a height position aligned in the horizontal direction with respect to the fuel cell device 32. A part (upper part) of the exhaust port 17 is formed at a height position aligned in the horizontal direction with respect to the hydrogen tank 31, and the other part (lower part) of the exhaust port 17 is formed at a height position aligned in the horizontal direction with respect to the fuel cell device 32. In the present embodiment, the entire region of the exhaust port 17 is formed at a height position aligned in the horizontal direction with respect to the heat exchanger 33. However, a part of the exhaust port 17 may be formed at a position offset upward with respect to the heat exchanger 33, or may be formed at a position offset downward with respect to the heat exchanger 33.

In the machine chamber 14, the fuel cell device 32 is disposed below the hydrogen tank 31 and at a position overlapping the hydrogen tank 31 when viewed from above in the vertical direction. In this case, the fuel cell device 32 can be efficiently disposed by utilizing the space below the hydrogen tank 31 in the machine chamber 14 having a limited size. Even if hydrogen gas leaks from the fuel cell device 32, the leaked hydrogen gas rises toward the hydrogen tank 31 located above the fuel cell device 32, so that it is possible to suppress diffusion of the hydrogen gas into a region where other equipment is disposed. The fuel cell device 32 is disposed at a position overlapping the hydrogen tank 31 when viewed from above in the vertical direction, so that the length of the intermediate-pressure hydrogen pipe 43 connecting the hydrogen tank 31 and the fuel cell device 32 can be reduced.

In the specific example illustrated in FIG. 5, the fuel cell device 32 is disposed immediately below the hydrogen tank 31 in the machine chamber 14. This makes it possible to more reliably raise the hydrogen gas leaked from the fuel cell device 32 toward the hydrogen tank 31 and to further reduce the length of the intermediate-pressure hydrogen pipe 43. In the specific example illustrated in FIG. 5, the pressure reducing valve 42 is disposed at a position offset in a predetermined direction (right direction in FIG. 5) with respect to the hydrogen tank 31, and a portion to which the intermediate-pressure hydrogen pipe 43 is connected in the fuel cell device 32 is a side surface (right side surface in FIG. 5) of the side surface of the fuel cell device 32 facing the predetermined direction. This makes it possible to further reduce the length of the intermediate-pressure hydrogen pipe 43.

In the present embodiment, the work machine 100 includes a plurality of hydrogen tanks 31 and a support frame 60 that supports the hydrogen tanks. The plurality of hydrogen tanks 31 includes a first hydrogen tank 31 and a second hydrogen tank 31 disposed immediately above the first hydrogen tank 31. The support frame 60 includes a first upper frame 61 and a plurality of leg frames 62 extending downward from the first upper frame 61 and supporting the first upper frame 61. The first upper frame 61 supports the first hydrogen tank 31 directly above the fuel cell device 32. Also, the support frame 60 further includes a second upper frame 63 disposed above the first upper frame 61. The second upper frame 63 supports the second hydrogen tank 31 directly above the fuel cell device 32 and the first hydrogen tank 31. The second upper frame 63 may be supported by the wall portion 13, may be supported by the first upper frame 61, or may be supported by the plurality of leg frames 62.

As illustrated in FIG. 5, each of the first hydrogen tank 31 and the second hydrogen tank 31 has a shape extending in one direction (longitudinal direction), and is disposed in a direction in which the longitudinal direction is along the flow direction of the cooling air CA. In the specific example illustrated in FIG. 5, each hydrogen tank 31 is disposed such that its longitudinal direction is oriented in the left-right direction. The first hydrogen tank 31 and the second hydrogen tank 31 are disposed with a gap therebetween in the vertical direction. Such arrangement of the first hydrogen tank 31 and the second hydrogen tank 31 can suppress an increase in resistance of the flow of the cooling air CA and suppress a decrease in heat exchange efficiency (cooling efficiency) of the heat exchanger 33. In addition, the plurality of hydrogen tanks 31 disposed in the machine chamber 14 may further include not only the first hydrogen tank 31 and the second hydrogen tank 31 arranged vertically but also a hydrogen tank (not illustrated) arranged in front of or behind the first hydrogen tank 31 and may further include a hydrogen tank (not illustrated) arranged in front of or behind the second hydrogen tank 31. In this case, the hydrogen tank 31 is efficiently mounted inside the machine chamber 14 which is a limited space.

It is preferable that each of the first upper frame 61, the plurality of leg frames 62, and the second upper frame 63 of the support frame 60 can stably support the hydrogen tank 31 and hardly causes resistance to the flow of the cooling air CA. That is, each of the plurality of leg frames 62 is preferably a member (for example, a bar-shaped member) that hardly resists the flow of the cooling air CA. In addition, each of the first upper frame 61 and the second upper frame 63 is preferably not a member (for example, a plate-like member) that easily resists the flow of the cooling air CA from one to the other of the region in which the hydrogen tank 31 is disposed and the region in which fuel cell device 32 is disposed, but a member (for example, a bar-shaped member, a punching metal, or the like) that hardly resists the flow of the cooling air CA from the one to the other.

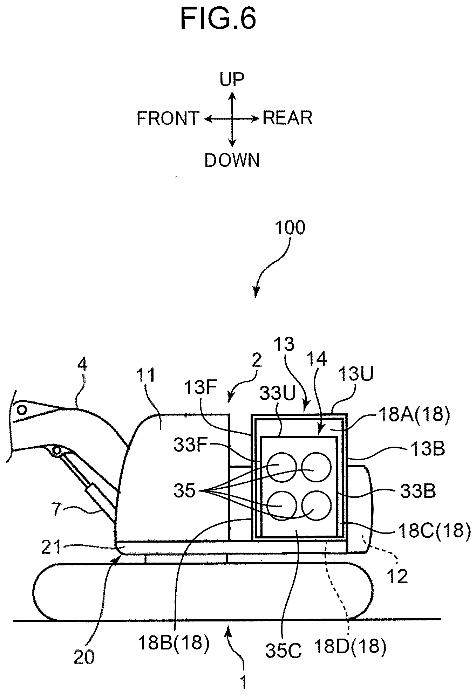

FIG. 6 is a partially broken left side view illustrating the work machine 100, and is a diagram including a cross section of a wall portion 13 defining the machine chamber 14 taken along line VI-VI in FIG. 5. As illustrated in FIGS. 5 and 6, the work machine 100 includes a partition 18 for preventing the cooling air CA having passed through the heat exchanger 33 from being mixed with the cooling air CA before passing through the heat exchanger 33 in the machine chamber 14. In this case, in the machine chamber 14, an upstream space, which is a space upstream of the heat exchanger 33 in the flow of the cooling air CA, and a downstream space, which is a space downstream of the heat exchanger 33 in the flow of the cooling air CA, are separated from each other by the heat exchanger 33 and the partition 18. As a result, since the cooling air CA whose temperature has increased after passing through the heat exchanger 33 is prevented from being mixed with the cooling air CA before passing through the heat exchanger 33, the temperature increase around the hydrogen tank 31 is further effectively suppressed.

The partition 18 is disposed, for example, along at least a part of the periphery of the heat exchanger 33. In the specific example illustrated in FIG. 6, the partition 18 includes an upper partition 18A disposed along an upper edge 33U of the heat exchanger 33, a front partition 18B disposed along a front edge 33F of the heat exchanger 33, and a rear partition 18C disposed along a rear edge 33B of the heat exchanger 33. The upper partition 18A extends back and forth along the upper edge 33U of the heat exchanger 33, and closes a gap between the upper edge 33U of the heat exchanger 33 and the upper cover 13U of the wall portion 13. The front partition 18B extends vertically along the front edge 33F of the heat exchanger 33, and closes a gap between the front edge 33F of the heat exchanger 33 and the front cover 13F of the wall portion 13. The rear partition 18C extends vertically along the rear edge 33B of the heat exchanger 33 and closes a gap between the rear edge 33B of the heat exchanger 33 and the rear cover 13B of the wall portion 13.

The partition 18 may be disposed along the entire circumference of the heat exchanger 33. In this case, the partition 18 may include a lower partition 18D disposed along a lower edge of the heat exchanger 33. Note that the partition 18 may have any shape and arrangement as long as it can separate the upstream space and the downstream space, and thus may not necessarily be disposed along the heat exchanger 33.

The partition 18 may be disposed along at least a part of the periphery of the shroud 35C. Specifically, for example, in the partition 18, the upper partition 18A may be disposed along the upper end portion of the shroud 35C, the front partition 18B may be disposed along the front end portion of the shroud 35C, and the rear partition 18C may be disposed along the rear end portion of the shroud 35C. In this aspect, a partition 18 and a shroud 35C suppress mixing of the cooling air CA whose temperature has increased after passing through the heat exchanger 33 with the cooling air CA before passing through the heat exchanger 33, so that the temperature increase around the hydrogen tank 31 is further effectively suppressed. The partition 18 may include both those disposed around the heat exchanger 33 and those disposed around the shroud 35C.

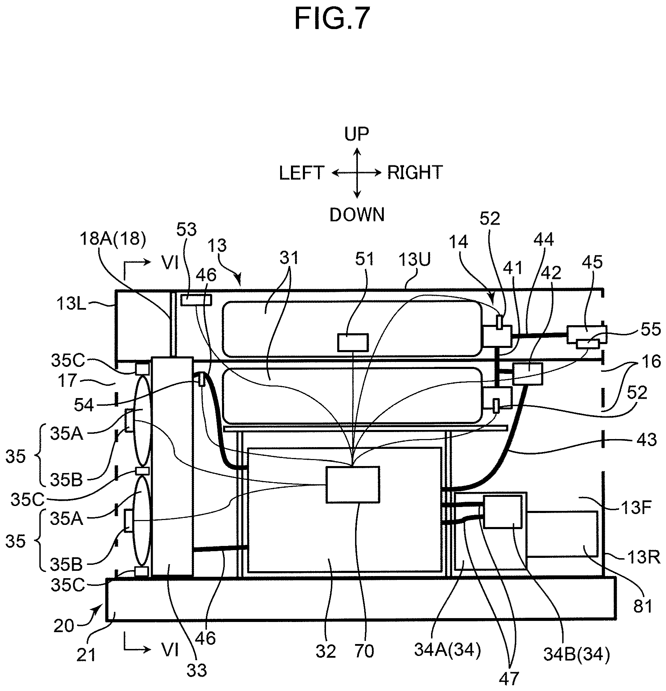

The work machine 100 includes a plurality of sensors and a controller 70 to which detection results from these sensors are input. FIG. 7 is a cross-sectional view illustrating the inside of the machine chamber 14, and illustrates the plurality of sensors and the controller 70.

The plurality of sensors includes a hydrogen tank atmosphere temperature sensor 51, a hydrogen gas temperature sensor 52, a hydrogen gas sensor 53, and a water temperature sensor 54.

The hydrogen tank atmosphere temperature sensor 51 detects the temperature of the atmosphere in the vicinity of the hydrogen tank 31, and inputs the detection result to the controller 70. The hydrogen gas temperature sensor 52 detects the temperature at the gas outlet of the hydrogen tank 31, and inputs a detection result to the controller 70. The hydrogen gas temperature sensor 52 may detect the temperature of a member constituting the gas outlet, or may detect the temperature of hydrogen itself exiting the gas outlet. The hydrogen tank atmosphere temperature sensor 51 is an example of a temperature detector in the present disclosure. The hydrogen gas temperature sensor 52 is another example of the temperature detector in the present disclosure.

The temperature detector may be a sensor that detects the temperature of the hydrogen tank 31 (for example, the temperature of the side surface of the hydrogen tank 31). For example, the temperature detector may detect a temperature of hydrogen in the hydrogen tank 31, or may detect a temperature of a pipe (for example, the intermediate-pressure hydrogen pipe 43) connecting the hydrogen tank 31 and the fuel cell device 32.

The hydrogen gas sensor 53 detects hydrogen gas in the machine chamber 14. The hydrogen gas sensor 53 is preferably disposed at a place in the machine chamber 14 where hydrogen gas is likely to remain, for example, at an upper portion of the machine chamber 14, and more preferably at an uppermost portion of the machine chamber 14. The plurality of sensors may include a plurality of hydrogen gas sensors 53. The plurality of hydrogen gas sensors 53 are preferably disposed at positions away from each other in the machine chamber 14. The hydrogen gas sensor 53 is an example of a hydrogen detector in the present disclosure.

The water temperature sensor 54 detects a temperature of cooling water circulating between the fuel cell device 32 and the heat exchanger 33 or a temperature correlated with the temperature, and inputs a detection result to the controller 70. The water temperature sensor 54 may detect, for example, the temperature of the water pipe 46. The water temperature sensor 54 may detect the temperature of the water pipe 46 that sends the cooling water from the fuel cell device 32 to the heat exchanger 33 in the water pipe 46, or may detect the temperature of the water pipe 46 that sends the cooling water from the heat exchanger 33 to the fuel cell device 32.

The controller 70 is provided with a computer including an arithmetic processing device and a memory. The controller 70 performs various controls by causing the arithmetic processing device to execute a program stored in advance in the memory. Specifically, it is as follows.

When the work machine 100 performs various actual works such as excavation work and work of leveling the ground at the work site, the controller 70 performs the following control, for example. That is, during the actual work, the controller 70 controls the generated power in the fuel cell device 32 so that the target power corresponding to the work load at that time is supplied to the electric motor 34A. At this time, the controller 70 performs control such that hydrogen corresponding to the target power is supplied from the hydrogen tank 31 to the fuel cell device 32. During actual operation, the controller 70 adjusts a rotation speed of the cooling fan 35 such that air outside the machine chamber 14 is sucked into the machine chamber 14 as cooling air CA and ventilation for discharging the sucked cooling air CA to the outside of the machine chamber 14 is sufficiently performed, thereby benerating cooling air CA having an appropriate air volume according to a situation at that time.

During the actual operation, the controller 70 controls the water pump to circulate the cooling water such that the temperature of the fuel cell device 32 is maintained in the allowable range. The thermal energy generated when the fuel cell device 32 generates electric power is transmitted to the cooling water. That is, heat exchange is performed between the fuel cell device 32 and the cooling water. The cooling water having exchanged heat with the fuel cell device 32 is sent to the heat exchanger 33 through the water pipe 46, and exchanges heat with the cooling air CA in the heat exchanger 33. As a result, the temperature of the cooling water decreases, and the temperature of the cooling air CA increases. The high-temperature cooling air CA having passed through the heat exchanger 33 is discharged from the exhaust port 17 to the outside of the machine chamber 14. The cooling water whose temperature has decreased in the heat exchanger 33 returns to the fuel cell device 32 through the water pipe 46, and exchanges heat with the fuel cell device 32 again.

The controller 70 may perform control to adjust the rotation speed of the cooling fan 35 according to the temperature detected by the water temperature sensor 54. Specifically, for example, the controller 70 may perform control for increasing the rotation speed of the cooling fan 35 when the temperature detected by the water temperature sensor 54 becomes equal to or higher than a water temperature specified value set in advance. As a result, the temperature of the cooling water can be sufficiently lowered in the heat exchanger 33, and as a result, the fuel cell device 32 can be appropriately cooled.

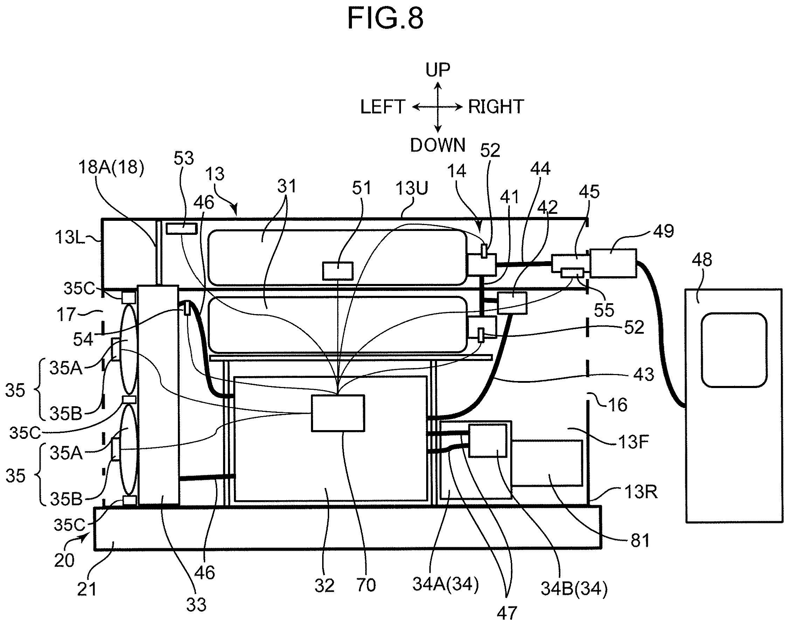

Next, the control by the controller 70 at the time of hydrogen filling will be described. The work machine 100 includes a hydrogen filling socket 45 and a filling device connection switch 55. The hydrogen filling socket 45 is connected to the hydrogen tank 31 via a pipe 44. The hydrogen filling socket 45 has a hydrogen filling port. FIG. 8 is a cross-sectional view illustrating the inside of the machine chamber 14, and shows a state in which a terminal 49 of a hydrogen filling device 48 is connected to a hydrogen filling port of the hydrogen filling socket 45. When the terminal 49 of the hydrogen filling device 48 is connected to the hydrogen filling port of the hydrogen filling socket 45, a signal (connection signal) indicating the connection is input from the filling device connection switch 55 to the controller 70.

When the terminal 49 of the hydrogen filling device 48 is connected to the hydrogen filling port of the hydrogen filling socket 45, filling of the hydrogen tank 31 with hydrogen from the hydrogen filling device 48 is started, and the controller 70 monitors the temperature of the hydrogen gas during the hydrogen filling or the temperature related thereto. The controller 70 prohibits an actual operation during hydrogen filling.

During hydrogen filling, the hydrogen tank 31 is filled with hydrogen gas under high pressure by the hydrogen filling device 48, so that the temperature of the hydrogen gas in the hydrogen tank 31 increases. The controller 70 may start rotation of the cooling fan 35 at the start of hydrogen filling, and perform control for increasing the rotation speed of the cooling fan 35 when the temperature detected by the hydrogen tank atmosphere temperature sensor 51 becomes equal to or higher than a preset first specified value during hydrogen filling. In addition, the controller 70 may maintain the stopped state without starting the rotation of the cooling fan 35 at the start of hydrogen filling, and may perform control to start the rotation of the cooling fan 35 when the temperature detected by the hydrogen tank atmosphere temperature sensor 51 becomes equal to or higher than a preset second specified value during hydrogen filling, and may further perform control to increase the rotation speed of the cooling fan 35 when the temperature detected by the hydrogen tank atmosphere temperature sensor 51 becomes equal to or higher than a third specified value higher than the second specified value. As described above, since the rotation speed of the cooling fan 35 is automatically increased by the control of a controller 70, even when the temperature of the hydrogen gas in the hydrogen tank 31 rises, the temperature rise around the hydrogen tank 31 is effectively suppressed.

In addition, the controller 70 may start rotation of the cooling fan 35 at the start of hydrogen filling, and perform control for increasing the rotation speed of the cooling fan 35 when the temperature detected by the hydrogen gas temperature sensor 52 becomes equal to or higher than a preset fourth specified value during hydrogen filling. In addition, the controller 70 may maintain the stopped state without starting the rotation of the cooling fan 35 at the start of hydrogen filling, and may perform control for starting the rotation of the cooling fan 35 when the temperature detected by the hydrogen gas temperature sensor 52 becomes equal to or higher than a preset fifth specified value during hydrogen filling, and may further perform control for increasing the rotation speed of the cooling fan 35 when the temperature detected by the hydrogen gas temperature sensor 52 becomes equal to or higher than a sixth specified value higher than the fifth specified value. As described above, since the rotation speed of the cooling fan 35 is automatically increased by the control of a controller 70, even when the temperature of the hydrogen gas in the hydrogen tank 31 rises, the temperature rise around the hydrogen tank 31 is effectively suppressed.

Next, the control by the controller 70 at the time of hydrogen leakage will be described. The controller 70 may perform control for starting rotation of the cooling fan 35 when the hydrogen gas sensor 53 detects hydrogen gas while the rotation of the cooling fan 35 is stopped. When the hydrogen gas sensor 53 detects hydrogen gas while the cooling fan 35 is rotating, the controller 70 may perform control to increase the rotation speed of the cooling fan 35. When the plurality of hydrogen gas sensors 53 are disposed in the machine chamber 14, the controller 70 may determine that the hydrogen gas sensor 53 has detected hydrogen gas when one or more hydrogen gas sensors 53 have detected hydrogen gas, and perform the above-described control. As described above, the rotation speed of the cooling fan 35 is automatically increased under the control of the controller 70 to promote ventilation of the machine chamber 14. This further improves safety at the time of hydrogen leakage. In this control, when the hydrogen gas sensor 53 detects hydrogen gas, it is preferable that the controller 70 performs control to increase the rotation speed of the cooling fan 35 to a maximum value. The control at the time of hydrogen leakage is preferably performed both during the actual operation and during hydrogen filling, and the control is more preferably always performed during the activation of the controller 70. When the rotation of the cooling fan 35 is started or the rotation speed of the cooling fan 35 is increased at the time of hydrogen leakage, the rotation direction of the impeller 35A of the cooling fan 35 may be controlled to be opposite to the normal rotation direction. In the present embodiment, the control for starting the rotation of the cooling fan 35 from a state where the rotation of the cooling fan 35 is stopped is included in the control for increasing the rotation speed of the cooling fan 35.

### [Second Embodiment]

Next, a work machine 100 according to a second embodiment of the present disclosure will be described. The work machine 100 according to the second embodiment is the same as the work machine 100 according to the first embodiment in that it has a basic structure as illustrated in FIGS. 1 to 4.

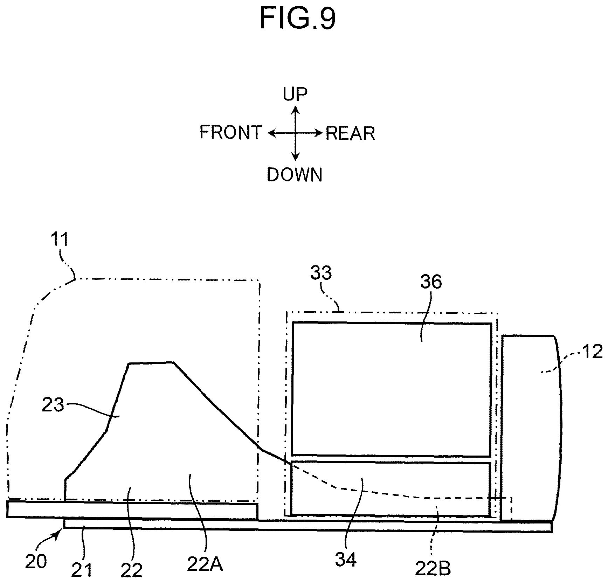

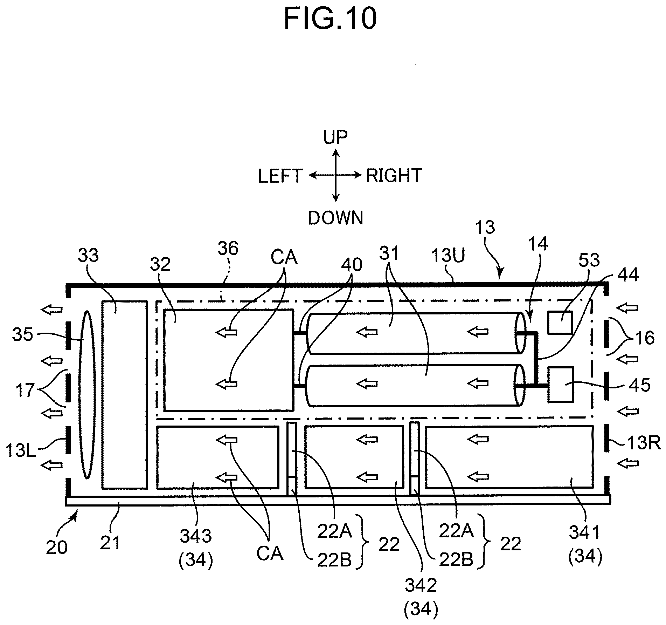

FIG. 9 is a side view illustrating an arrangement of an electronic device 34 and a hydrogen-related device 36 disposed on the slewing frame 20 of the work machine 100 according to the second embodiment. In FIG. 9, illustration of the wall portion 13 and the cooling fan 35 is omitted, and the positions of the cab 11 and the heat exchanger 33 are indicated by two-dot chain lines. FIG. 10 is a diagram illustrating the inside of the machine chamber 14 of the work machine 100 according to the second embodiment, and is a cross-sectional view taken along line A-A in FIG. 1. FIG. 10 illustrates various devices disposed in the machine chamber 14, and illustrates flows of the cooling air CA in the machine chamber 14 by arrows.

As illustrated in FIG. 10, the work machine 100 according to the second embodiment includes a hydrogen tank 31 that stores hydrogen, a fuel cell device 32 to which hydrogen (hydrogen gas) is supplied from the hydrogen tank 31, a heat exchanger 33 that exchanges heat with the cooling air CA, an electronic device 34 for operating the work machine 100, and a wall portion 13 that defines the machine chamber 14. In the machine chamber 14, the hydrogen tank 31 is disposed above the electronic device 34, and is disposed upstream of the heat exchanger 33 in the flow direction of the cooling air CA. These configurations are the same as those of the work machine 100 according to the first embodiment, and achieve the same effects as those of the first embodiment.

Also in the second embodiment, the wall portion 13 has a shape (for example, a box shape) capable of defining the machine chamber 14, and has an intake port 16 and an exhaust port 17. Also in the second embodiment, the portion where the intake port 16 is formed and the portion where the exhaust port 17 is formed in the wall portion 13 are not limited to the specific example illustrated in FIG. 10, and can be formed in various portions as in the first embodiment.

Also in the second embodiment, the work machine 100 includes the cooling fan 35 that forms the flow of the cooling air CA. The cooling fan 35 can effectively form a flow of the cooling air CA from the intake port 16 to the exhaust port 17 in the machine chamber 14. The cooling fan 35 includes an impeller, a fan motor (not illustrated), and a shroud (not illustrated).

In the work machine 100 illustrated in FIGS. 9 and 10, the hydrogen-related device 36 including the hydrogen tank 31 and the fuel cell device 32 is disposed above the electronic device 34. In this case, even if hydrogen gas leaks from at least one of the hydrogen tank 31 and the fuel cell device 32 included in the hydrogen-related device 36, the hydrogen gas moves upward from the hydrogen-related device 36 in the machine chamber 14, so that the hydrogen gas is prevented from reaching the electronic device 34 disposed below the hydrogen-related device 36. This improves safety at the time of hydrogen leakage. In the machine chamber 14, the hydrogen-related device 36 may be supported by a support frame (for example, similar to the support frame 60 in the first embodiment) (not illustrated) so as to be disposed above the electronic device 34.

In the second embodiment illustrated in FIG. 10, the hydrogen-related device 36 further includes a hydrogen filling socket 45 having a hydrogen filling port, a hydrogen pipe 40 connecting the hydrogen tank 31 and the fuel cell device 32, and a pipe 44 connecting the hydrogen tank 31 and the hydrogen filling socket 45. In this case, even if hydrogen gas leaks from at least one of the hydrogen filling port of the hydrogen filling socket 45, the hydrogen pipe 40, and the pipe 44 included in the hydrogen-related device 36, the hydrogen gas moves upward from the hydrogen-related device 36 in the machine chamber 14, and thus is prevented from reaching the electronic device 34 disposed below the hydrogen-related device 36. This further improves safety at the time of hydrogen leakage.

The hydrogen-related device 36 is disposed at a position above the rear portion 22B of the standing body 22 and at a position overlapping the rear portion 22B when viewed from above in the vertical direction. Specifically, the hydrogen-related device 36 is disposed so as to overlap each of the rear portions 22B of the left and right standing plates 23 and 23 in the standing body 22 when viewed from above in the vertical direction. In this case, the hydrogen-related device 36 can efficiently be disposed by utilizing a space above the standing body 22 in the machine chamber 14 having a limited size. As illustrated in FIG. 9, the hydrogen-related device 36 is disposed so as to be positioned directly above the rear portion 22B of the standing body 22 of the slewing frame 20. By disposing the hydrogen-related device 36, which is large in size and heavy, directly above the rear portion 22B of the standing body 22, the position of the center of gravity of the entire work machine 100 can be set as low as possible behind.

As illustrated in FIG. 10, the electronic device 34 is disposed to the right and left of the rear portion 22B of the standing body 22 of the slewing frame 20. That is, the electronic device 34 includes a right electronic device 341 disposed adjacent to the right side of the rear portion 22B of the standing body 22, and a left electronic device 343 disposed adjacent to the left side of the rear portion 22B of the standing body 22. By disposing the right electronic device 341 and the left electronic device 343 of the electronic devices 34 in the spaces formed on the right and left sides of the rear portion 22B of the standing body 22, it is possible to improve safety at the time of hydrogen leakage and to improve mounting efficiency of components constituting the work machine inside the machine chamber 14 having a limited size.

The electronic device 34 is disposed between the left and right standing plates 23 and 23 of the slewing frame 20. That is, the electronic device 34 includes a central electronic device 342 disposed between the left and right standing plates 23 and 23. By disposing the central electronic device 342 among the electronic devices 34 in the spaces formed between the left and right standing plates 23 and 23, it is possible to improve the safety at the time of hydrogen leakage and improve the mounting efficiency of the components constituting the work machine 100 inside the machine chamber 14 having a limited size.

In the second embodiment, the electronic device 34 may include the electric motor, the inverter, the converter, the battery, the compressor, the water pump, and the heater described in the first embodiment. Each of these devices is disposed in any one of a space on the right side of the rear portion 22B of the standing body 22 in FIG. 10, a space on the left side of the rear portion 22B, and a space between the left and right standing plates 23 and 23.

Also in the second embodiment, the controller 70 may perform control similar to that in the first embodiment. For example, during an actual operation, the controller 70 adjusts the rotation speed of the cooling fan 35 such that ventilation in the machine chamber 14 is sufficiently performed, and generates cooling air CA having an appropriate air volume according to a situation at that time. During the actual operation, the controller 70 controls the water pump to circulate the cooling water such that the temperature of the fuel cell device 32 is maintained in the allowable range. The thermal energy generated when the fuel cell device 32 generates electric power is transmitted to the cooling water.

Further, the controller 70 may perform control to adjust the rotation speed of the cooling fan 35 according to the temperature detected by a water temperature sensor (not illustrated). Specifically, for example, the controller 70 may perform control for increasing the rotation speed of the cooling fan 35 when the temperature detected by the water temperature sensor becomes equal to or higher than a water temperature specified value set in advance. As a result, the temperature of the cooling water can be sufficiently lowered in the heat exchanger 33, and as a result, the fuel cell device 32 can be appropriately cooled.

In addition, the controller 70 may perform control for increasing the rotation speed of the cooling fan 35 when the temperature detected by the hydrogen tank atmosphere temperature sensor (not illustrated) becomes equal to or higher than a preset first specified value during hydrogen filling.

In addition, the controller 70 may perform control for increasing the rotation speed of the cooling fan 35 when the temperature detected by the hydrogen gas temperature sensor (not illustrated) becomes equal to or higher than a preset second specified value during hydrogen filling.

When the hydrogen gas sensor 53 detects hydrogen gas, the controller 70 may perform control to increase the rotation speed of the cooling fan 35. As described above, the rotation speed of the cooling fan 35 is automatically increased under the control of the controller 70 to promote ventilation of the machine chamber 14.

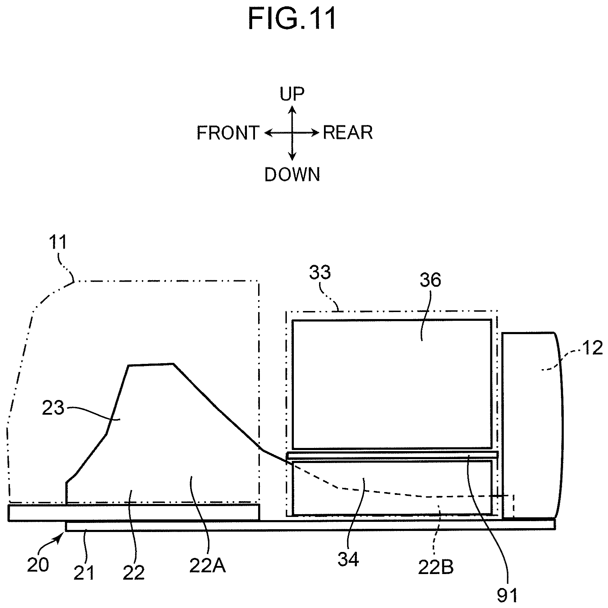

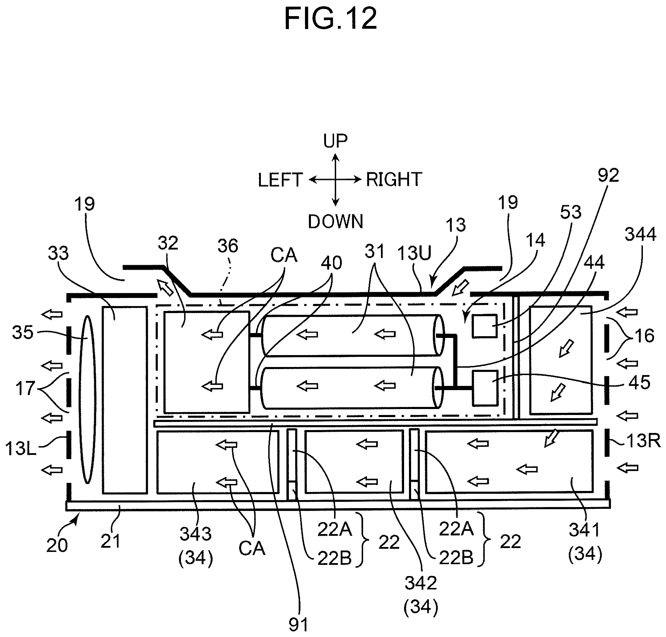

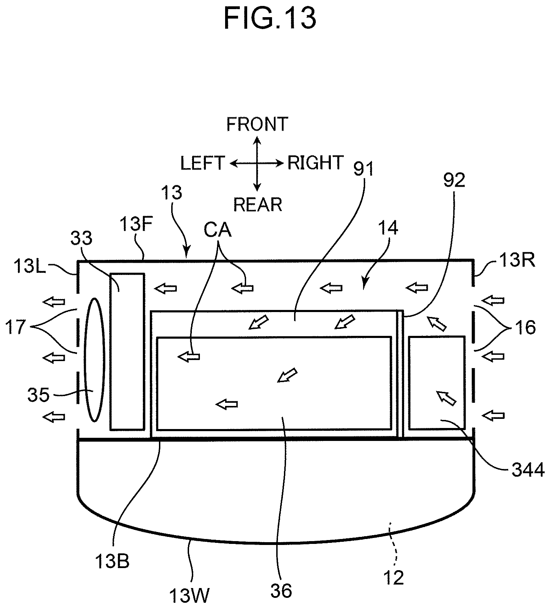

FIG. 11 is a side view illustrating the arrangement of the electronic device and the hydrogen-related device disposed on the slewing frame 20 of the work machine 100 according to the first modification of the second embodiment, FIG. 12 is a diagram illustrating the inside of the machine chamber 14 of the work machine 100 and is a cross-sectional view taken along line A-A in FIG. 1, and FIG. 13 is a diagram illustrating the inside of the machine chamber 14 of the work machine 100 and is a cross-sectional view taken along line B-B in FIG. 1.

The work machine 100 according to the first modification illustrated in FIG. 11 is different from the work machine 100 illustrated in FIGS. 9 and 10 in further including a first partition wall 91 disposed between the hydrogen-related device 36 and the electronic device 34 in the machine chamber 14. The first partition wall 91 is a member that can partition a space (lower electronic device space) in which the right electronic device 341, the central electronic device 342, and the left electronic device 343 are disposed and a space (upper hydrogen-related device space) in which the hydrogen-related device 36 located above these electronic devices 341, 342, and 343 is disposed. The first partition wall 91 may be formed of, for example, a plate-like member. In the first modification, even if hydrogen gas leaks from the hydrogen-related device 36, the first partition wall 91 more reliably prevents the leaked hydrogen gas from reaching the electronic devices 341, 342, and 343, and the lower electronic device space and the upper hydrogen-related device space are partitioned by the first partition wall 91, so that safety at the time of hydrogen leakage can be further improved.

In addition, in the work machine 100 according to the first modification, the hydrogen-related device 36 is preferably modularized on the first partition wall 91. For example, it is preferable that the components constituting hydrogen-related device 36 is unitized and integrally lifted by a crane or the like. This can improve workability when the hydrogen tank 31 and the fuel cell device 32 included in the hydrogen-related device 36 are disposed on the first partition wall 91.

The work machine 100 according to the first modification includes a first electronic device and a second electronic device. The first electronic device includes the right electronic device 341, the central electronic device 342, and the left electronic device 343 described above. As illustrated in FIG. 12, in the work machine 100 according to the first modification, a second electronic device 344 is an electronic device different from the first electronic device, and is disposed at a position aligned in the horizontal direction (in the first modification, the left-right direction) with respect to the hydrogen-related device 36.

As illustrated in FIGS. 12 and 13, the work machine 100 according to the first modification further includes a second partition wall 92 disposed between the hydrogen-related device 36 and the second electronic device 344 in the machine chamber 14. Even when it is necessary to dispose the second electronic device 344 in addition to the first electronic device in the machine chamber 14, and it is necessary to dispose the second electronic device 344 at a position aligned in the horizontal direction with respect to the hydrogen-related device 36, the region where hydrogen-related device 36 is disposed and the region where second electronic device 344 is disposed are partitioned by the second partition wall 92. Therefore, even if hydrogen gas leaks from the hydrogen-related device 36, the second partition wall 92 more reliably prevents the leaked hydrogen gas from reaching the second electronic device 344, thereby ensuring safety at the time of hydrogen leakage.

In the first modification, as illustrated in FIG. 12, upper cover 13U of wall portion 13 further includes one or a plurality of ventilation ports 19 communicating with a space (upper hydrogen-related device space) in which hydrogen-related devices 36 are disposed. This promotes ventilation in the upper hydrogen-related device space. It is preferable that the ventilation port 19 is shaped such that an upper side thereof is covered with a plate-like member in order to suppress entry of rainwater or dust into the machine chamber 14 and a side thereof is opened for ventilation.

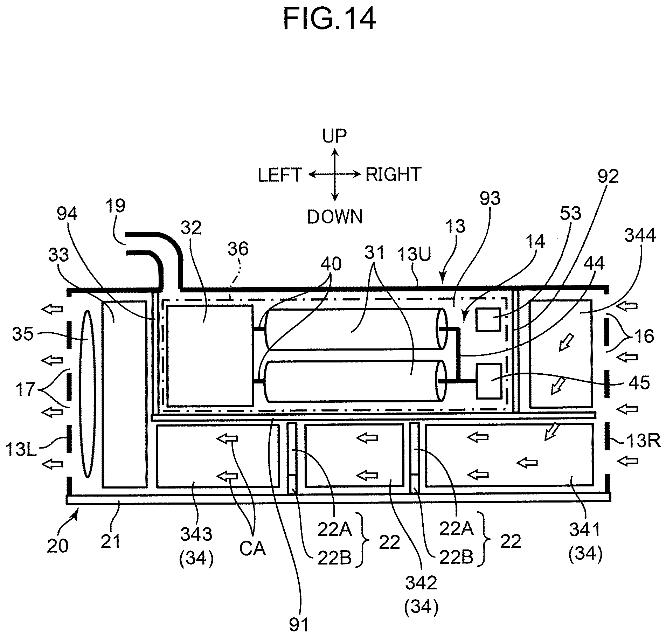

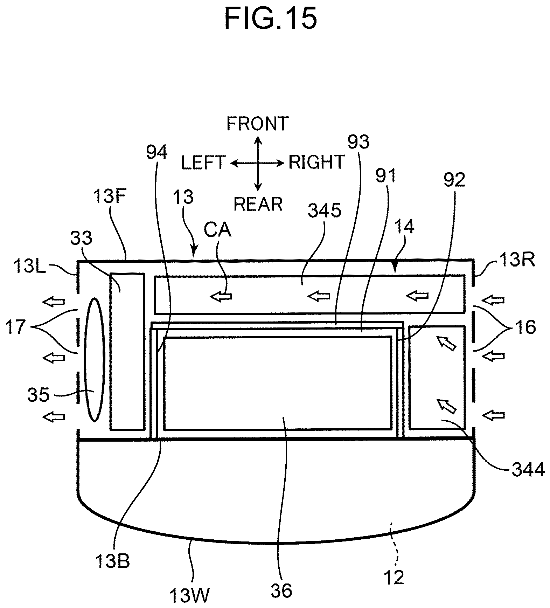

FIG. 14 is a diagram illustrating the inside of a machine chamber 14 of a work machine 100 according to a second modification of the second embodiment and is a cross-sectional view taken along line A-A in FIG. 1, and FIG. 15 is a diagram illustrating the inside of the machine chamber 14 of the work machine 100 and is a cross-sectional view taken along line B-B in FIG. 1.

The work machine 100 according to the second modification illustrated in FIGS. 14 and 15 is different from the first modification illustrated in FIGS. 12 and 13 in further including a third electronic device 345, a third partition wall 93, and a fourth partition wall 94.

The third electronic device 345 is an electronic device different from the first electronic device and the second electronic device 344, and is disposed at a position aligned in the horizontal direction (in the first modification, the front-rear direction) with respect to the hydrogen-related device 36. Third partition wall 93 is disposed between the hydrogen-related device 36 and the third electronic device 345 in the machine chamber 14. The fourth partition wall 94 is disposed between the hydrogen-related device 36 and the heat exchanger 33 in the machine chamber 14. In the second modification, the fourth partition wall 94 may be omitted.

In the second modification illustrated in FIGS. 14 and 15, even when the third electronic device 345 needs to be further disposed in the machine chamber 14 in addition to the first electronic device and the second electronic device 344, and needs to be disposed at a position aligned in the horizontal direction with respect to the hydrogen-related device 36, the region where the hydrogen-related device 36 is disposed and the region where third electronic device 345 is disposed are partitioned by the third partition wall 93. Therefore, even if hydrogen gas leaks from the hydrogen-related device 36, the leaked hydrogen gas is more reliably prevented from reaching the third electronic device 345 by the third partition wall 93, and safety at the time of hydrogen leakage can be secured.

Also in the second modification, as illustrated in FIG. 14, upper cover 13U of wall portion 13 has one or a plurality of ventilation ports 19 communicating with a space (upper hydrogen-related device space) in which hydrogen-related devices 36 are disposed. This promotes ventilation in the upper hydrogen-related device space.

### [Third Embodiment]

Next, a work machine 100 according to a third embodiment of the present disclosure will be described. The work machine 100 according to the third embodiment is the same as the work machine 100 according to the first embodiment in that it has a basic structure as illustrated in FIGS. 1 to 4.

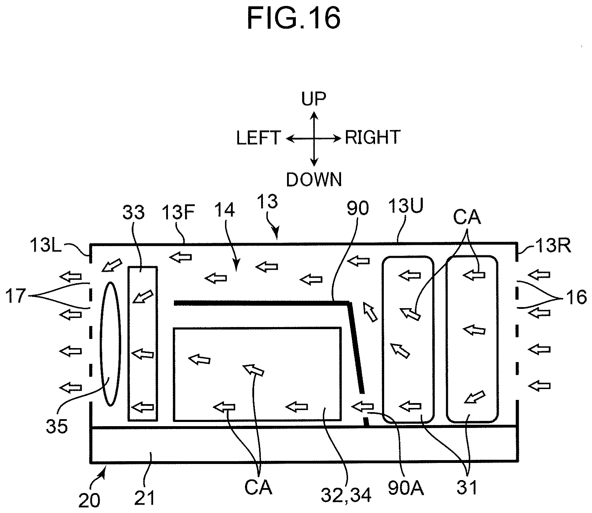

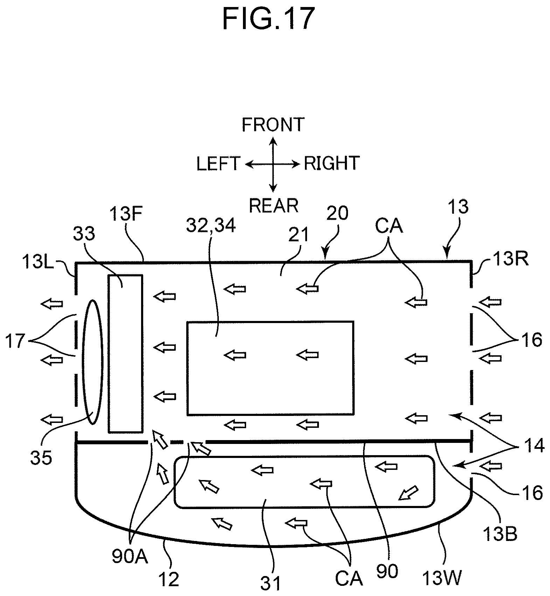

FIG. 16 is a diagram illustrating the inside of the machine chamber 14 of the work machine 100 according to the third embodiment, and is a cross-sectional view taken along line A-A in FIG. 1. FIG. 17 is a diagram illustrating the inside of a machine chamber 14 of a work machine 100 according to a modification of the third embodiment, and is a cross-sectional view taken along line B-B in FIG. 1.

Each of the work machine 100 illustrated in FIG. 16 and the work machine 100 illustrated in FIG. 17 includes a hydrogen tank 31 that stores hydrogen, a fuel cell device 32 to which hydrogen is supplied from the hydrogen tank 31, a heat exchanger 33 that exchanges heat with the cooling air CA, an electronic device 34 for operating the work machine 100, a wall portion 13 that defines the machine chamber 14, and a partition wall 90 disposed between the hydrogen tank 31 and the electronic device 34 in the machine chamber 14. The hydrogen tank 31 is disposed upstream of the heat exchanger 33 in the machine chamber 14 in the flow direction of the cooling air CA.

In each of these work machines 100, a region where the hydrogen tank 31 is disposed and a region where the electronic device 34 is disposed in the machine chamber 14 are partitioned by the partition wall 90. Therefore, even if hydrogen gas leaks from the hydrogen tank 31 or the vicinity thereof (for example, a hydrogen filling port), the leaked hydrogen gas is prevented from reaching the electronic device 34 in the machine chamber 14. This improves safety at the time of hydrogen leakage. In the machine chamber 14, the cooling air CA before passing through heat exchanger 33, that is, the cooling air CA before a temperature rises due to heat exchange in the heat exchanger 33 is supplied to the hydrogen tank 31 disposed upstream of the heat exchanger 33, so that a temperature rise around the hydrogen tank 31 is suppressed. The suppression of the temperature rise around the hydrogen tank 31 contributes to suppression of an increase in filling time necessary for filling the hydrogen tank 31 with hydrogen. In addition, when the hydrogen tank 31 is, for example, a resin tank, suppression of a temperature rise around the hydrogen tank 31 also contributes to suppression of deterioration of the resin tank.

In the work machine 100 illustrated in FIG. 16, the machine chamber 14 is formed between the cab 11 and the counterweight 12. The hydrogen tank 31 is disposed upstream of the fuel cell device 32 and the electronic device 34 in the flow direction of the cooling air CA, and the fuel cell device 32 and the electronic device 34 are disposed upstream of the heat exchanger 33 in the flow direction of the cooling air CA. The partition wall 90 has a shape that separates a region where hydrogen tank 31 is disposed from a region where the fuel cell device 32 and the electronic device 34 are disposed in the machine chamber 14. The partition wall 90 may have a communication port 90A that allows the region where the hydrogen tank 31 is disposed to communicate with the region where the fuel cell device 32 and the electronic device 34 are disposed. In the work machine 100 illustrated in FIG. 16, the hydrogen tank 31 is not disposed above the electronic device 34 in the machine chamber 14 and is disposed at a position aligned with the electronic device 34 in the horizontal direction (left-right direction). However, since the partition wall 90 as described above is disposed between the region where the hydrogen tank 31 is disposed and the region where the fuel cell device 32 and the electronic device 34 are disposed, safety at the time of hydrogen leakage is improved.

In the work machine 100 illustrated in FIG. 17, the machine chamber 14 is formed between the cab 11 and the weight cover 13W (rearmost cover 13W). That is, the machine chamber 14 includes a part of a space (weight space) covered by the weight cover 13W. The space (electronic device space) in which the fuel cell device 32 and the electronic device 34 are disposed and the weight space are disposed so as to be disposed in the front-rear direction via the partition wall 90. In the second modification, a path through which the cooling air CA flows in the order of the intake port 16, the weight space, and the heat exchanger 33 and a path through which the cooling air CA flows in the order of the intake port 16, the electronic device space, and the heat exchanger 33 are formed in parallel. The hydrogen tank 31 is disposed upstream of the heat exchanger 33 in the flow direction of the cooling air CA. Similarly, the fuel cell device 32 and electronic device 34 are disposed upstream of the heat exchanger 33 in the flow direction of the cooling air CA. The partition wall 90 has a shape that separates a region where hydrogen tank 31 is disposed from a region where the fuel cell device 32 and the electronic device 34 are disposed in the machine chamber 14. The partition wall 90 may have a communication port 90A that allows the region where the hydrogen tank 31 is disposed to communicate with the region where the fuel cell device 32 and the electronic device 34 are disposed. In the work machine 100 illustrated in FIG. 17, the hydrogen tank 31 is not disposed above the electronic device 34 in the machine chamber 14 and is disposed at a position aligned with the electronic device 34 in the horizontal direction (front-rear direction). However, since the partition wall 90 as described above is disposed between the region where the hydrogen tank 31 is disposed and the region where the fuel cell device 32 and the electronic device 34 are disposed, safety at the time of hydrogen leakage is improved.

### [Modifications]

The embodiments of the present disclosure have been described above, but the present disclosure is not limited to the embodiments, and includes the following modifications, for example.

### (A) Partition

Each of the work machines according to the second and third embodiments may include the partition 18 in the first embodiment.

### (B) Electronic device

In the second embodiment, the electronic device 341 and the electronic device 343 are disposed to both right and left of the rear portion 22B of the standing body 22, and the electronic device 342 is disposed between the left and right standing plates 23 and 23. However, one or two of these electronic devices 341, 342, and 343 may be omitted. In the work machine according to the present disclosure, the electronic device disposed in the machine chamber may be at least one of an electric motor, an inverter, a converter, a battery, a compressor, a water pump, and a heater. That is, a part of the electric motor, the inverter, the converter, the battery, the compressor, the water pump, and the heater may be disposed outside the machine chamber.

### (C) Hydraulic device

In the first to third embodiments, the hydraulic pump 81 is disposed inside the machine chamber 14, but the hydraulic pump 81 may be disposed outside the machine chamber 14. A part of the hydraulic pump 81 may be disposed inside the machine chamber 14, and another part of the hydraulic pump 81 may be disposed outside the machine chamber 14.

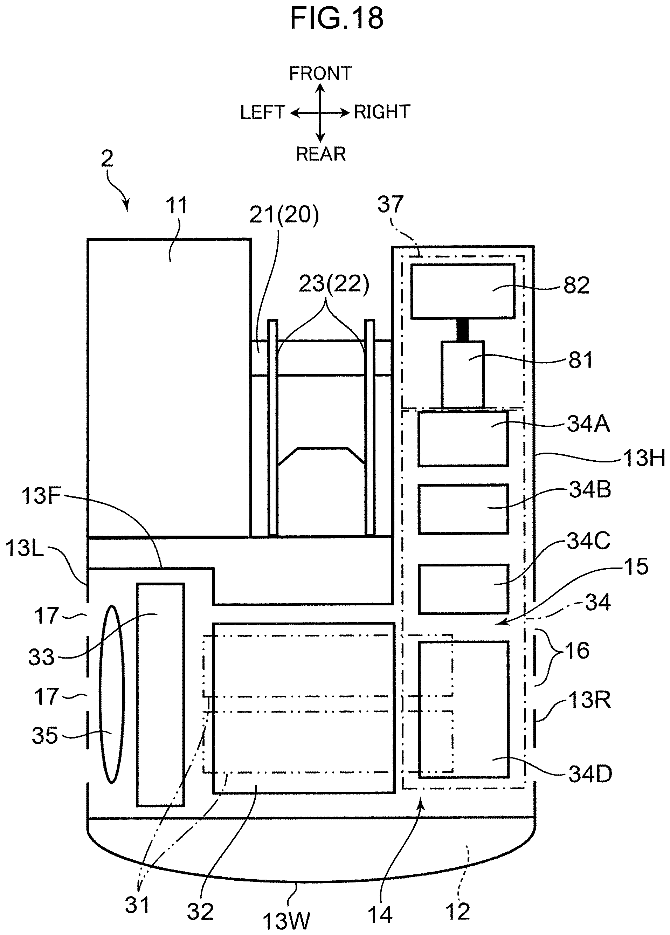

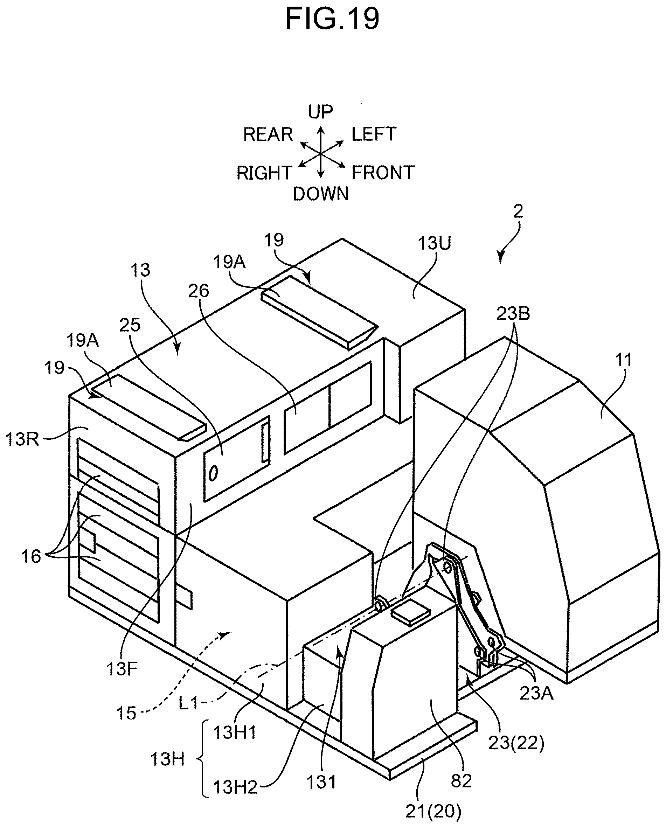

For example, in the work machine 100 illustrated in FIG. 18, the hydraulic pump 81 is disposed at a front portion (for example, a right front portion) of the slewing frame 20 of the upper slewing body 2. In the work machine 100, a hydraulic device area, which is an area in which a hydraulic device 37 is disposed, is formed in the right front portion of the slewing frame 20. The hydraulic device 37 includes a hydraulic pump 81 that discharges hydraulic oil, and a hydraulic oil tank 82 that stores hydraulic oil to be supplied to the hydraulic pump 81. The hydraulic oil tank 82 is disposed at the front end portion of the hydraulic device area, and the hydraulic pump 81 is disposed behind the hydraulic oil tank 82. In the modification illustrated in FIG. 18, the hydraulic pump 81 is disposed behind (immediately behind) the hydraulic oil tank 82, and no other device is interposed between the hydraulic oil tank 82 and the hydraulic pump 81, so that the length of the pipe connecting the hydraulic oil tank 82 and the hydraulic pump 81 can be reduced. In the specific example illustrated in FIG. 19, the hydraulic pump 81 is accommodated in a device housing space inside the device housing chamber 15 defined by the device cover 13H (specifically, a second device cover 13H2 to be described later) illustrated in FIG. 19, and the hydraulic oil tank 82 is disposed in front of the device cover 13H. However, the entire hydraulic device 37 may be accommodated in a device housing space inside the device housing chamber 15 defined by the device cover 13H.

In addition, an electronic device area, which is an area where the electronic device 34 is disposed, is formed behind the hydraulic device area. The electronic device 34 includes an electric motor 34A, an inverter 34B, a converter 34C, and a battery 34D. The electric motor 34A is disposed at the front end portion of the electronic device area. That is, the hydraulic oil tank 82, the hydraulic pump 81, and the electric motor 34A are disposed in this order from the front to the rear. In the electronic device area, the inverter 34B, the converter 34C, and the battery 34D are disposed behind the electric motor 34A. In this modification, since the electronic device area is formed behind the hydraulic device area and the electric motor 34A is disposed at the front end portion of the electronic device area, the wiring for supplying electric power to the electric motor 34A can be accommodated in the electronic device area, and the wiring can be prevented from becoming long. In this modification, the electric motor 34A, the inverter 34B, the converter 34C, and the battery 34D are disposed in this order from the front to the rear, but the arrangement order of these devices is not limited to the specific example illustrated in FIG. 18.

The fuel cell device 32 is disposed on the left of the rear end portion (in the specific example illustrated in FIG. 18, the battery 34D) of the electronic device area. The hydrogen tank 31 is disposed on the fuel cell device 32. The hydrogen tank 31 is disposed above the rear end portion of the electronic device area. By disposing a part or all of the hydraulic device 37 outside the machine chamber 14, the hydrogen tank 31, the fuel cell device 32, and the heat exchanger 33 can be mounted inside the machine chamber 14, which is a limited space, and a part or all of the electronic device 34 can be mounted inside the machine chamber 14. Also in the modification illustrated in FIGS. 18 and 19, the hydrogen tank 31 is disposed upstream of the heat exchanger 33 in the flow direction of the cooling air in the machine chamber 14.

### (D) Ventilation port

In the second embodiment, one or more ventilation ports 19 are formed in the upper cover 13U of the wall portion 13. However, in at least one of the first embodiment and the third embodiment, the ventilation port 19 similar to that in the second embodiment may be formed. For example, in the work machine 100 illustrated in FIGS. 18 and 19, a pair of left and right ventilation ports 19 is formed in the upper cover 13U of the wall portion 13. The left ventilation port 19 is formed to discharge air inside the machine chamber 14 toward the left to the outside of the machine chamber 14, and the right ventilation port 19 is formed to discharge air inside the machine chamber 14 toward the right to the outside of the machine chamber 14. Specifically, each of the pair of ventilation ports 19 is constituted by a gap between the upper cover 13U and a plate member 19A that covers an opening (not illustrated) formed in the upper cover 13U from above. In the work machine 100 illustrated in FIG. 19, the left ventilation port 19 is, for example, a gap between the left edge of the left plate member 19A and the upper cover 13U, and the right ventilation port 19 is, for example, a gap between the right edge of the right plate member 19A and the upper cover 13U. As described above, it is preferable that the directions of the air discharged from the pair of ventilation ports 19 is opposite to each other. Further, the direction of the air discharged from the ventilation ports 19 may be backward. It is preferable that the direction of the air discharged from the ventilation ports 19 is a direction in which the air discharged from the ventilation ports 19 easily moves away from the work machine 100. In the specific example illustrated in FIG. 19, since the distance between the right ventilation port 19 and the right edge of the upper cover 13U is smaller than the distance between the left ventilation port 19 and the left edge of the upper cover 13U, the air discharged from the right ventilation port 19 tends to move away from the work machine 100 as compared with the air discharged from the left ventilation port 19.

### (E) Filling port

In the first embodiment, the hydrogen filling socket 45 is disposed inside the machine chamber 14 as illustrated in FIG. 8, and is configured such that the terminal 49 of the hydrogen filling device 48 is connected to the hydrogen filling port of the hydrogen filling socket 45 from the outside of the machine chamber 14 through intake port 16. However, the present disclosure is not limited to such a configuration. For example, in the work machine 100 illustrated in FIGS. 18 and 19, a structure for accessing the hydrogen filling port may be formed at a portion other than the intake port 16. Specifically, as illustrated in FIG. 19, a hydrogen filling opening 25 may be formed in a part of the front cover 13F of the wall portion 13 that defines machine chamber 14. The hydrogen filling opening 25 is an opening for accessing the hydrogen filling port located inside the machine chamber 14 from the outside of the machine chamber 14, and is an opening communicating with the inside of the machine chamber 14. It is preferable that an openable and closable or removable lid for suppressing intrusion of rainwater and dust into the machine chamber 14 is attached to the hydrogen filling opening 25. By providing such a lid, the operator can switch between the open state and the closed state of the hydrogen filling opening 25 by operating the lid. For example, the hydrogen filling opening 25 is opened when hydrogen filling is performed, and the hydrogen filling opening 25 is closed when hydrogen filling is not performed. It is preferable that a static electricity removing sheet for removing static electricity charged on a body by being touched by a hand of an operator is disposed in the vicinity of the hydrogen filling opening 25. The hydrogen filling opening 25 is not limited to the cover that closes the front side of the machine chamber 14, but may be formed in a cover that closes the right side or the left side of the machine chamber, may be formed in a cover that closes the rear side of the machine chamber 14, or may be formed in a cover that closes the upper side of the machine chamber 14.

### (F) Inspection port

An inspection port for inspecting the hydrogen tank 31 accommodated in the machine chamber 14 may be formed in the wall portion 13 of the work machine 100 illustrated in FIGS. 18 and 19. Specifically, for example, in the work machine 100 illustrated in FIG. 19, an inspection port 26 for inspecting the hydrogen tank 31 inside the machine chamber 14 from the outside of the machine chamber 14 is formed in a part of the front cover 13F of the wall portion 13 defining the machine chamber 14. The inspection port 26 is an opening for visually confirming the hydrogen tank 31 by opening the space inside the machine chamber 14 to the outside of the machine chamber 14. It is preferable that an openable and closable or removable lid for suppressing intrusion of rainwater and dust into the machine chamber 14 is attached to the inspection port 26. In the wall portion 13, not only one inspection port 26 but also a plurality of inspection ports 26 may be formed. The inspection port 26 is not limited to the cover that closes the front side of the machine chamber 14, but may be formed in a cover that closes the right side or the left side of the machine chamber 14, may be formed in a cover that closes the rear side of the machine chamber 14, or may be formed in a cover that closes the upper side of the machine chamber 14.

### (G) Device cover

As illustrated in FIG. 19, the device cover 13H defining the device housing chamber 15 may have a stepped portion 131 having a partially low height. Specifically, this will be described as follows. As illustrated in FIG. 19, the standing plate 23 of the standing body 22 of the slewing frame 20 is formed with an insertion hole 23A through which a coupling pin rotatably coupling the base end portion of the boom cylinder 7 is inserted, and an insertion hole 23B through which a coupling pin rotatably coupling the base end portion 4A of the boom 4 is inserted. The device cover 13H defining the device housing chamber 15 includes a first device cover 13H1 and a second device cover 13H2 positioned in front of the first device cover 13H1. The upper surface of the second device cover 13H2 is located below the upper surface of the first device cover 13H1 and below a horizontal line L1. The horizontal line L1 is a straight line (virtual line) that passes through the center of the insertion hole 23B and is parallel to the left-right direction. The stepped portion 131 is formed by the upper surface of the second device cover 13H2 being positioned below the upper surface of the first device cover 13H1. Since the stepped portion 131 is formed as described above, the device cover 13H does not interfere with the coupling pin when the attaching and detaching operation of attaching and detaching the coupling pin to and from the insertion hole 23B is performed, so that workability of the attaching and detaching operation is improved. The hydraulic oil tank 82 is disposed in front of the stepped portion 131. In the specific example illustrated in FIG. 19, the upper surface of the second device cover 13H2 is positioned below the upper surface of the hydraulic oil tank 82. In this case, since the upper surface of the second device cover 13H2 is positioned below the upper surface of the first device cover 13H1 and the upper surface of the hydraulic oil tank 82, the stepped portion 131 forms a recess recessed downward. For example, the hydraulic pump 81 may be disposed in the internal space defined by the second device cover 13H2.

### (H) Actuator

In the first to third embodiments, all of the plurality of actuators are hydraulic actuators that operate by receiving supply of hydraulic oil discharged from the hydraulic pump 81, but at least some of the plurality of actuators may be configured by actuators other than the hydraulic actuators. Specifically, for example, at least some of the plurality of actuators may be electric actuators. The electric actuator may be configured to perform an operation such as an expansion/contraction operation or a rotation operation by an electric motor operated by electric power supplied from at least one of the fuel cell device 32 and the battery, for example.

### [Summary of embodiments]

As described above, according to the present disclosure, there is provided the work machine according to the first to sixteenth aspects capable of improving safety at the time of hydrogen leakage and suppressing a temperature rise around the hydrogen tank.

A work machine according to a first aspect includes a hydrogen tank that stores hydrogen, a heat exchanger that exchanges heat with cooling air, an electronic device for operating the work machine, and a machine chamber. The hydrogen tank is disposed above the electronic device in the machine chamber, and is disposed upstream of the heat exchanger in a flow direction of the cooling air.

In this work machine, even if hydrogen gas leaks from the hydrogen tank or the vicinity thereof, the hydrogen gas moves upward from the hydrogen tank or the vicinity thereof in the machine chamber, and thus, it is suppressed that the hydrogen gas reaches the electronic device disposed below the hydrogen tank. This improves safety at the time of hydrogen leakage. In the machine chamber, the cooling air before passing through heat exchanger, that is, the cooling air before a temperature rises due to heat exchange in the heat exchanger is supplied to the hydrogen tank disposed upstream of the heat exchanger, so that a temperature rise around the hydrogen tank is suppressed. The suppression of the temperature rise around the hydrogen tank contributes to the suppression of the temperature rise of the hydrogen tank when the hydrogen tank is filled with hydrogen. In addition, when the hydrogen tank is, for example, a resin tank, suppression of a temperature rise around the hydrogen tank also contributes to suppression of deterioration of the resin tank.

In a second aspect, it is preferable that the work machine according to the first aspect further includes the following features. That is, in the work machine according to the second aspect, it is preferable that the machine chamber is defined by a wall portion having an intake port through which air outside the machine chamber is taken into the machine chamber as the cooling air, and an exhaust port through which the cooling air inside the machine chamber is discharged to an outside of the machine chamber, and the work machine further includes a cooling fan that forms a flow of the cooling air. In the second aspect, it is possible to effectively form a flow of the cooling air from the intake port to the exhaust port in the machine chamber. In the work machine according to the second aspect, for example, the cooling fan may be disposed between the exhaust port and the heat exchanger, or may be disposed between the exhaust port and the heat exchanger and at a position adjacent to the exhaust port.

In a third aspect, it is preferable that the work machine according to the second aspect further includes the following features. That is, in the work machine according to the third aspect, it is preferable that at least a part of the intake port is formed at a height position aligned in a horizontal direction with respect to the hydrogen tank or a position above the hydrogen tank. In the third aspect, even if hydrogen gas leaks from the hydrogen tank or the vicinity thereof, the hydrogen gas is easily discharged to the outside of the machine chamber through the intake port formed at the same height position as the hydrogen tank or at a position above the hydrogen tank. This further improves safety at the time of hydrogen leakage.

In a fourth aspect, it is preferable that the work machine according to the second or third aspect further includes the following features. That is, in the work machine according to the fourth aspect, it is preferable that at least a part of the exhaust port is formed at a height position aligned in a horizontal direction with respect to the hydrogen tank or a position above the hydrogen tank. In the fourth aspect, even if hydrogen gas leaks from the hydrogen tank or the vicinity thereof, the hydrogen gas is easily discharged to the outside of the machine chamber through the exhaust port formed at the same height position as the hydrogen tank or at a position above the hydrogen tank. This further improves safety at the time of hydrogen leakage.

In a fifth aspect, it is preferable that the work machine according to any one of the second to fourth aspects further includes the following features. That is, it is preferable that the work machine according to the fifth aspect further includes a temperature detector that detects a temperature of the hydrogen tank or a temperature related thereto, and a controller, in which the controller performs control for increasing a rotation speed of the cooling fan when a temperature detected by the temperature detector becomes equal to or higher than a preset specified value. In the fifth aspect, when the temperature detected by the temperature detector becomes equal to or higher than a specified value, the rotation speed of the cooling fan is automatically increased under the control of the controller, so that the temperature rise around the hydrogen tank is effectively suppressed. For example, the temperature detector may detect a temperature of the hydrogen tank, may detect a temperature (atmosphere temperature) around the hydrogen tank, may detect a temperature of a hydrogen outlet of the hydrogen tank, may detect a temperature of hydrogen in the hydrogen tank, or may detect a temperature of a pipe connecting the hydrogen tank and the fuel cell device.

In a sixth aspect, it is preferable that the work machine according to any one of the second to fifth aspect further includes the following features. That is, it is preferable that the work machine according to the sixth aspect includes a hydrogen detector that detects hydrogen in the machine chamber, and a controller, in which the controller performs control for increasing a rotation speed of the cooling fan when the hydrogen detector detects hydrogen. In the sixth aspect, when hydrogen gas is detected in the machine chamber, the rotation speed of the cooling fan is automatically increased under the control of the controller to promote ventilation of the machine chamber. This further improves safety at the time of hydrogen leakage.

In a seventh aspect, it is preferable that the work machine according to any one of the first to sixth aspects further includes the following features. That is, it is preferable that the work machine according to the seventh aspect further includes a partition configured to avoid mixing of the cooling air having passed through the heat exchanger with the cooling air before passing through the heat exchanger in the machine chamber. In the seventh aspect, a partition suppresses mixing of the cooling air whose temperature has increased after passing through the heat exchanger with the cooling air before passing through the heat exchanger, so that the temperature increase around the hydrogen tank is further effectively suppressed. In the work machine according to the seventh aspect, the partition is preferably disposed along at least a part of the periphery of the heat exchanger, and is more preferably disposed along the entire periphery of the heat exchanger.

In an eighth aspect, the work machine according to any one of the first to seventh aspects may further include the following features. That is, the work machine according to the eighth aspect may further include a fuel cell device to which hydrogen is supplied from the hydrogen tank, in which the fuel cell device is disposed at a position below the hydrogen tank and at a position overlapping the hydrogen tank when viewed from above in a vertical direction. In the eighth aspect, even if hydrogen gas leaks from the fuel cell device, the leaked hydrogen gas rises toward the hydrogen tank located above the fuel cell device, so that it is possible to suppress diffusion of the hydrogen gas into a region where other equipment is disposed. In addition, in the eighth aspect, the fuel cell device is disposed at a position overlapping the hydrogen tank when viewed from above in the vertical direction, so that the length of the pipe connecting the hydrogen tank and the fuel cell device can be reduced.

In a ninth aspect, the work machine according to any one of the first to eighth aspects may further include the following features. That is, the work machine according to the ninth aspect may further include a fuel cell device to which hydrogen is supplied from the hydrogen tank, in which a hydrogen-related device including the hydrogen tank and the fuel cell device may be disposed above the electronic device. In the ninth aspect, even if hydrogen gas leaks from the hydrogen-related device, the hydrogen gas moves upward from the hydrogen-related device in the machine chamber, so that the hydrogen gas is prevented from reaching the electronic device disposed below the hydrogen-related device. This improves safety at the time of hydrogen leakage.

In a tenth aspect, it is preferable that the work machine according to the ninth aspect further includes the following features. That is, it is preferable that the work machine according to the tenth aspect further includes a boom, and a slewing frame, in which the slewing frame includes a frame body and a standing body standing upright from the frame body and extending forward and backward, the standing body includes a boom attachment portion to which a base end portion of the boom is attached, and a rear portion that is positioned behind the boom attachment portion and is lower in height than the boom attachment portion, and the hydrogen-related device is disposed at a position above the rear portion of the standing body and at a position overlapping the rear portion when viewed from above in the vertical direction. In the tenth aspect, the hydrogen-related device that is large in size and heavy is disposed at the position above the rear portion of the standing body and at the position overlapping the rear portion when viewed from above in the vertical direction, so that the position of the center of gravity of the entire work machine can be made as low as possible behind.

In an eleventh aspect, it is preferable that the work machine according to the tenth aspect further includes the following features. That is, in the work machine according to the eleventh aspect, it is preferable that the electronic device is disposed to at least one of right and left of the rear portion of the standing body. In the eleventh aspect, by disposing the electronic device in the space formed on at least one of the right and left sides of the rear portion of the standing body, it is possible to improve safety at the time of hydrogen leakage and to improve mounting efficiency of components constituting the work machine.

In a twelfth aspect, it is preferable that the work machine according to the tenth or eleventh aspect further includes the following features. That is, in the work machine according to the twelfth aspect, it is preferable that the standing body includes left and right standing plates standing upright from the frame body and extending forward and backward, the left and right standing plates is disposed at intervals in the left-right direction, and the electronic device is disposed between the left and right standing plates. In the twelfth aspect, by disposing the electronic device in the spaces formed between the left and right standing plates, it is possible to improve the safety at the time of hydrogen leakage and improve the mounting efficiency of the components constituting the work machine.

In a thirteenth aspect, it is preferable that the work machine according to any one of the ninth to twelfth aspects further includes the following features. That is, it is preferable that the work machine according to the thirteenth aspect further includes a partition wall disposed between the hydrogen-related device and the electronic device in the machine chamber. In the thirteenth aspect, since the region where the hydrogen-related device is disposed and the region where the electronic device is disposed are partitioned by the partition wall, safety at the time of hydrogen leakage can be further improved.

In a fourteenth aspect, the work machine according to the thirteenth aspect preferably further includes the following features. That is, in the work machine according to the fourteenth aspect, it is preferable that the hydrogen-related device is modularized on the partition wall. In the fourteenth aspect, workability can be improved when the hydrogen tank and the fuel cell device included in the hydrogen-related device are disposed on the partition wall.

In a fifteenth aspect, it is preferable that the work machine according to the thirteenth or fourteenth aspect further includes the following features. That is, in the work machine according to the fifteenth aspect, the electronic device may be a first electronic device, the partition wall may be a first partition wall, and the work machine may further include a second electronic device that is an electronic device different from the first electronic device and is disposed at a position aligned in a horizontal direction with respect to the hydrogen-related device, and a second partition wall disposed between the hydrogen-related device and the second electronic device in the machine chamber. Even when it is necessary to dispose the second electronic device in addition to the first electronic device in the machine chamber, and it is necessary to dispose the second electronic device at a position aligned in the horizontal direction with respect to the hydrogen-related device, in the fifteenth aspect, since the region where the hydrogen-related device is disposed and the region where the second electronic device is disposed are partitioned by the second partition wall, safety at the time of hydrogen leakage can be secured.

A work machine according to a sixteenth aspect includes a hydrogen tank that stores hydrogen, a heat exchanger that exchanges heat with cooling air, an electronic device for operating a work machine, a machine chamber, and a partition wall disposed between the hydrogen tank and the electronic device in the machine chamber, in which the hydrogen tank is disposed upstream of the heat exchanger in a flow direction of the cooling air in the machine chamber. In the work machine according to the sixteenth aspect, since the region where the hydrogen tank is disposed and the region where the electronic device is disposed are partitioned by the partition wall, even if the hydrogen gas leaks from the hydrogen tank or the vicinity thereof, the leaked hydrogen gas is prevented from reaching the electronic device in the machine chamber. This improves safety at the time of hydrogen leakage. In the machine chamber, the cooling air before passing through heat exchanger, that is, the cooling air before a temperature rises due to heat exchange in the heat exchanger is supplied to the hydrogen tank disposed upstream of the heat exchanger, so that a temperature rise around the hydrogen tank is suppressed. The suppression of the temperature rise around the hydrogen tank contributes to the suppression of the temperature rise of the hydrogen tank when the hydrogen tank is filled with hydrogen. In addition, when the hydrogen tank is, for example, a resin tank, suppression of a temperature rise around the hydrogen tank also contributes to suppression of deterioration of the resin tank.

## Claims

1. A work machine comprising:
a hydrogen tank that stores hydrogen;
a heat exchanger that exchanges heat with cooling air;
an electronic device for operating a work machine; and
a machine chamber,
wherein the hydrogen tank is disposed above the electronic device in the machine chamber, and is disposed upstream of the heat exchanger in a flow direction of the cooling air.

2. The work machine according to claim 1, wherein
the machine chamber is defined by a wall portion having an intake port through which air outside the machine chamber is taken into the machine chamber as the cooling air, and an exhaust port through which the cooling air inside the machine chamber is discharged to an outside of the machine chamber, and
the work machine further comprises a cooling fan that forms a flow of the cooling air.

3. The work machine according to claim 2, wherein at least a part of the intake port is formed at a height position aligned in a horizontal direction with respect to the hydrogen tank or a position above the hydrogen tank.

4. The work machine according to claim 2 or 3, wherein at least a part of the exhaust port is formed at a height position aligned in a horizontal direction with respect to the hydrogen tank or a position above the hydrogen tank.

5. The work machine according to any one of claims 2 to 4, further comprising
a temperature detector that detects a temperature of the hydrogen tank or a temperature related thereto; and
a controller,
wherein the controller performs control for increasing a rotation speed of the cooling fan when a temperature detected by the temperature detector becomes equal to or higher than a preset specified value.

6. The work machine according to any one of claims 2 to 5, comprising:
a hydrogen detector that detects hydrogen in the machine chamber; and
a controller,
wherein the controller performs control for increasing a rotation speed of the cooling fan when the hydrogen detector detects hydrogen.

7. The work machine according to any one of claims 1 to 6, further comprising a partition configured to avoid mixing of the cooling air having passed through the heat exchanger with the cooling air before passing through the heat exchanger in the machine chamber.

8. The work machine according to any one of claims 1 to 7, further comprising a fuel cell device to which hydrogen is supplied from the hydrogen tank,
wherein the fuel cell device is disposed at a position below the hydrogen tank and at a position overlapping the hydrogen tank when viewed from above in a vertical direction.

9. The work machine according to any one of claims 1 to 8, further comprising a fuel cell device to which hydrogen is supplied from the hydrogen tank,
wherein a hydrogen-related device including the hydrogen tank and the fuel cell device is disposed above the electronic device.

10. The work machine according to claim 9, further comprising:
a boom; and
a slewing frame,
wherein the slewing frame includes a frame body and a standing body standing upright from the frame body and extending forward and backward,
the standing body includes a boom attachment portion to which a base end portion of the boom is attached, and a rear portion that is positioned behind the boom attachment portion and is lower in height than the boom attachment portion, and
the hydrogen-related device is disposed at a position above the rear portion of the standing body and at a position overlapping the rear portion when viewed from above in the vertical direction.

11. The work machine according to claim 10, wherein the electronic device is disposed to at least one of right and left of the rear portion of the standing body.

12. The work machine according to claim 10 or 11, wherein
the standing body includes left and right standing plates standing upright from the frame body and extending forward and backward,
the left and right standing plates are disposed at intervals in the left-right direction, and
the electronic device is disposed between the left and right standing plates.

13. The work machine according to any one of claims 9 to 12, further comprising a partition wall disposed between the hydrogen-related device and the electronic device in the machine chamber.

14. The work machine according to claim 13, wherein the hydrogen-related device is modularized on the partition wall.

15. The work machine according to claim 13 or 14, wherein
the electronic device is a first electronic device,
the partition wall is a first partition wall, and
the work machine further comprises:
a second electronic device that is an electronic device different from the first electronic device and is disposed at a position aligned in a horizontal direction with respect to the hydrogen-related device; and
a second partition wall disposed between the hydrogen-related device and the second electronic device in the machine chamber.

16. A work machine comprising:
a hydrogen tank that stores hydrogen;
a heat exchanger that exchanges heat with cooling air;
an electronic device for operating a work machine;
a machine chamber; and
a partition wall disposed between the hydrogen tank and the electronic device in the machine chamber,
wherein the hydrogen tank is disposed upstream of the heat exchanger in a flow direction of the cooling air in the machine chamber.
